# EUROPEAN PATENT APPLICATION

(11) **EP 3 439 364 A1**
(43) Date of publication of application: **06.02.2019**
(21) Application number: 17773549.5
(22) Date of filing: 24.01.2017
(51) Int. Cl.: H04W 36/00, H04L 12/70, H04W 80/04

(54) **WIRELESS COMMUNICATION DEVICE, SERVER, AND METHOD**

(30) Priority: 31.03.2016 JP 2016072460
(71) Applicant: Sony Corporation, Tokyo 108-0075 (JP)
(72) Inventor: SAITO, Shin, Tokyo 108-0075 (JP); TERAOKA, Fumio, Yokohama-shi Kanagawa 223-8522 (JP)
(74) Representative: Witte, Weller & Partner Patentanwälte mbB
(86) International application number: PCT/JP2017/002198
(87) International publication number: WO 2017/168999

(57) **Abstract**

[Object]

To provide a structure capable of sharing information regarding movement of an application between a movement source and a movement destination.

[Solution]

A wireless communication device includes a control unit configured to transmit a message to another wireless communication device, the message causing a movement target virtual network function (VNF) operating on a corresponding server inside an evolved packet system (EPS) to move to another server corresponding to the other wireless communication device.

## Description

### Technical Field

The present disclosure relates to a wireless communication device, a server, and a method.

### Background Art

In recent years, there has attracted attention a mobile-edge computing (MEC) technology of performing data processing in a server provided at a position physically close to a terminal device such as a smartphone.

In MEC, a server (also referred to as an edge server, a mobile-edge (ME) server, or a host) is disposed at a position physically close to a terminal device, and therefore a communication delay is reduced, as compared to a general cloud server that is concentratedly disposed, and it is possible to use an application required to have high real-time performance. Further, in MEC, the edge server close to the terminal device is caused to perform distributed processing of a function that has been processed on the terminal device side so far, and therefore it is possible to realize high-speed network/application processing, regardless of performance of the terminal device. The edge server may have various functions such as a function serving as an application server and a function serving as a content server and can provide various services to the terminal device.

According to the MEC technology, a UE can be provided with a service by, for example, an optimum ME server such as a nearby ME server. However, a service may not necessarily be constantly provided by the optimum ME server. For example, when a UE has moved, the UE becomes physically distant from the ME server which is a service providing source in some cases. Therefore, an application which is being used can preferably be moved from the original ME server to a more appropriate ME server. For example, Non-Patent Literature 1 discloses a technology related to movement of an application.

### Citation List

### Non-Patent Literature

Non-Patent Literature 1: All Things Cellular' 15, August 17-21, 2015, London UK, 2015 ACM ISBN 978-1-4503-3538-6/15/08 "MobiScud: A fast Moving Personal Cloud in the Mobile Network" School of computing, university of Utah

### Disclosure of Invention

### Technical Problem

However, technologies proposed in the foregoing Non-Patent Literature 1 and the like were only recently proposed, and thus it is hard to say that the technologies suffice as technologies for utilizing MEC technologies. For example, a technology for sharing information regarding movement of an application between a movement source and a movement destination is also one of such insufficient technologies.

### Solution to Problem

According to the present disclosure, there is provided a wireless communication device including a control unit configured to transmit a message to another wireless communication device, the message causing a movement target virtual network function (VNF) operating on a corresponding server inside an evolved packet system (EPS) to move to another server corresponding to the other wireless communication device.

In addition, according to the present disclosure, there is provided a server that is provided inside an EPS and causes a VNF to operate, the server including a control unit configured to cause a movement target VNF to move to the server on a basis of a message received by a corresponding wireless communication device from another wireless communication device corresponding to another server, the message causing the movement target VNF operating on the other server to move to the server.

In addition, according to the present disclosure, there is provided a method including transmitting a message to another wireless communication device by a processor, the message causing a movement target VNF operating on a corresponding server inside an EPS to move to another server corresponding to the other wireless communication device.

In addition, according to the present disclosure, there is provided a method including causing a movement target VNF to move to a server by the server that is provided inside an EPS and causes a VNF to operate, on a basis of a message received by a corresponding wireless communication device from another wireless communication device corresponding to another server, the message causing the movement target VNF operating on the other server to move to the server.

### Advantageous Effects of Invention

According to the present disclosure, as described above, it is possible to provide a structure capable of sharing information regarding movement of an application between a movement source and a movement destination. Note that the effects described above are not necessarily limitative. With or in the place of the above effects, there may be achieved any one of the effects described in this specification or other effects that may be grasped from this specification.

### Brief Description of Drawings

FIG. 1 is an explanatory view for describing an outline of MEC.
FIG. 2 is an explanatory view for describing a platform of a ME server.
FIG. 3 is a diagram illustrating an example of an architecture of SDN/NFV.
FIG. 4 is a diagram illustrating an example of an architecture of an ME server realized by the SDN/NFV.
FIG. 5 is a diagram illustrating an example of a reference architecture related to the ME server.
FIG. 6 is an explanatory view for describing an architecture of an E-UTRAN.
FIG. 7 is an explanatory view for describing an architecture of an E-UTRAN.
FIG. 8 is a diagram illustrating a protocol stack in an S1 user plane.
[FIG. 9] FIG. 9 is a diagram illustrating a protocol stack in an X2 user plane.
FIG. 10 is a diagram illustrating a protocol stack in an S1 control plane.
FIG. 11 is a diagram illustrating a protocol stack in an X2 control plane.
FIG. 12 is a diagram illustrating an example of a protocol stack in an RN according to an embodiment of the present disclosure.
FIG. 13 is a diagram illustrating an example of an architecture in a next-generation network.
FIG. 14 is a diagram illustrating an example of an architecture in a next-generation network.
FIG. 15 is a diagram illustrating an example of a schematic configuration of a system according to the embodiment.
FIG. 16 is a block diagram illustrating an example of a configuration of a UE according to the embodiment.
FIG. 17 is a block diagram illustrating an example of a configuration of an RN according to the embodiment.
FIG. 18 is a block diagram illustrating an example of a configuration of a DeNB according to the embodiment.
FIG. 19 is a block diagram illustrating an example of a configuration of a host according to the embodiment.
FIG. 20 is a diagram for describing an example of a configuration of a vGW according to the embodiment.
FIG. 21 is a diagram illustrating a protocol stack in communication between hosts according to the embodiment.
FIG. 22 is an explanatory view for describing an example of a situation in which a VNF is moved according to the embodiment.
FIG. 23 is a sequence diagram illustrating an example of a flow of processes related to a handover procedure by an RN according to the embodiment.
FIG. 24 is a sequence diagram illustrating an example of a flow of processes related to a handover procedure by an RN according to the embodiment.
FIG. 25 is a sequence diagram illustrating an example of a flow of processes related to a VNF relocation procedure performed in the system according to the embodiment.
FIG. 26 is a sequence diagram illustrating an example of a flow of processes related to a VNF relocation phase and a routing table update phase performed in the system according to the embodiment.
FIG. 27 is a sequence diagram illustrating an example of the flow of the processes related to the VNF relocation phase and the routing table update phase performed in the system according to the embodiment.
FIG. 28 is an explanatory view for describing an example of movement of the VNF according to the embodiment.
FIG. 29 is an explanatory view for describing an example of movement of the VNF according to the embodiment.
FIG. 30 is a block diagram illustrating an example of a schematic configuration of a server.
FIG. 31 is a block diagram illustrating a first example of a schematic configuration of an eNB.
FIG. 32 is a block diagram illustrating a second example of the schematic configuration of the eNB.
FIG. 33 is a block diagram illustrating an example of a schematic configuration of a smartphone.
FIG. 34 is a block diagram illustrating an example of a schematic configuration of a car navigation device.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, in the present specification and the drawings, different reference numerals are given to nodes that have substantially the same functional configurations to distinguish the nodes from each other. For example, a plurality of nodes that have substantially the same functional configurations are distinguished from each other like a UE 1, a UE 2, and a UE 3, as necessary. However, in a case where it is not necessary to distinguish a plurality of nodes that have substantially the same functional configurations from each other, reference numerals are omitted. For example, in a case where it is not particularly necessary to distinguish the UE 1, the UE 2, and the UE 3 from each other, the UE 1, the UE 2, and the UE 3 are simply referred to as the UEs. The same applies to other nodes such as P-GWs, S-GWs, MMEs, eNBs, and RNs included in a cellular network.

Note that the description will be made in the following order.
1. Introduction
   1.1. MEC
   1.2. Relay node
   1.3. Technical problems
2. Configuration example
   2.1. Schematic configuration example of system
   2.2. Configuration example of UE
   2.3. Configuration example of RN
   2.4. Configuration example of eNB
   2.5. Configuration example of host
3. Technical features
   3.1. Allocation of IP address
   3.2. Communication route
   3.3. Movement of VNF
   3.4. Modification examples
4. Application examples
5. Conclusion

### <<1. Introduction>>

### <1.1. MEC>

### (1) Outline

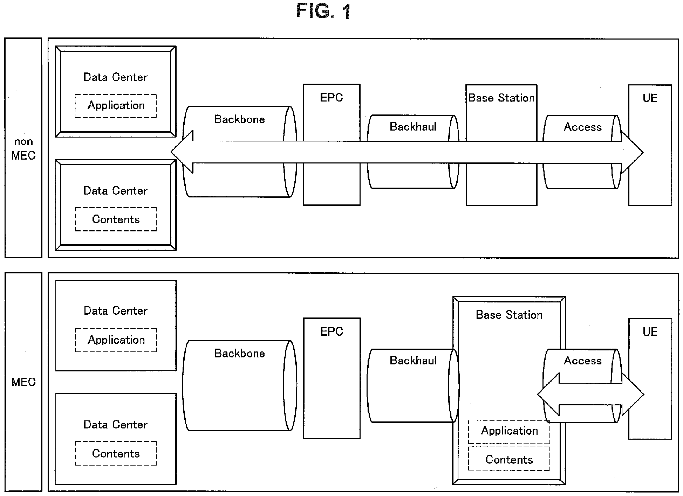

First, an outline of MEC will be described with reference to FIG. 1.

FIG. 1 is an explanatory view for describing an outline of MEC. An upper part of FIG. 1 illustrates a communication path for allowing user equipment (UE) to access an application and contents in current (MEC is not introduced) mobile communication represented by long term evolution (LTE). Further, a lower part thereof illustrates a communication path for allowing the UE to access an application and contents in a case where MEC is introduced.

As illustrated in the upper part of FIG. 1, in the current mobile communication, an application and contents are disposed in IP networks existing on the outside of an evolved packet core (EPC) (a side far from the UE). Thus, in order to execute an application or acquire contents, the UE performs communication via all a relay network (for example, Backbone network), the EPC, a backhaul link, a base station, and an access link which exist on a path to a data center. Therefore, enormous network costs and delay occur.

Meanwhile, as illustrated in the lower part of FIG. 1, in MEC, an application and contents are held on the inside of the EPC (a side close to the UE). For example, in the example illustrated in FIG. 1, a ME server (i.e., host) integrally provided with a base station functions as an application server and a content server. Thus, the UE only needs to perform major (strictly, since there may be an exchange with a server other than the EPC) communication on the inside of the EPC in order to execute an application or acquire contents. Therefore, by introducing MEC, it is possible to not only perform communication with extremely-short delay but also reduce traffic other than the access link (for example, the backhaul link, the EPC, and the relay network). Furthermore, reduction in delay of communication and reduction in traffic other than the access link may also contribute to improvement in throughput and reduction in power consumption on the UE and the network side. As described above, introduction of MEC may have various merits for a user, a network provider, and a service provider. In MEC, data is subjected to distributed processing on a side closer to a local side (i.e., a side close to the UE), and therefore MEC is particularly expected to be applied to an application rooted in an area and a distributed computer.

Note that FIG. 1 illustrates an example in which the ME server is integrally provided with the base station. However, the present technology is not limited to such an example. The ME server may be provided as a device different from the base station or may be physically separated from the base station.

### (2) Platform

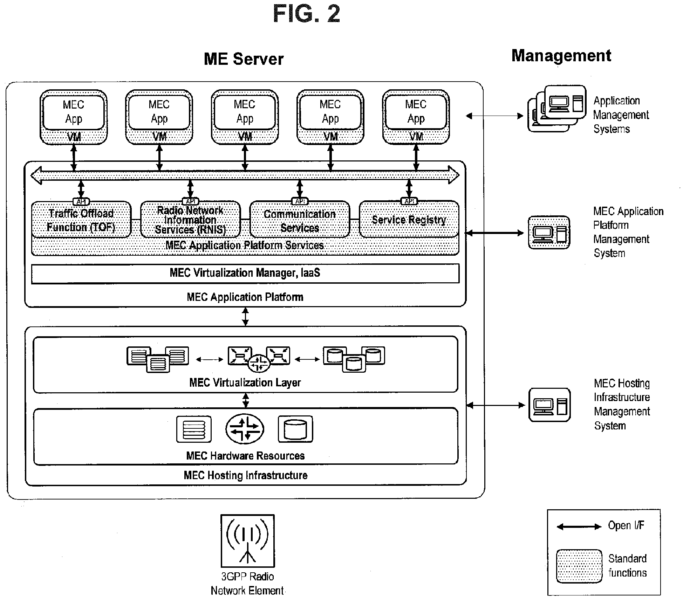

Next, a platform of a MEC server will be described with reference to FIG. 2.

FIG. 2 is an explanatory view for describing the platform of the ME server. A 3GPP radio network element that is the lowest constituent element is base station equipment such as an antenna and an amplifier. A hosting infrastructure thereon is made up of hardware resources, such as server equipment and a virtualization layer formed by software that virtualizes those hardware resources, and can provide a general virtual server technology. An application platform operates on this virtual server.

A virtualization manager performs management such as generation and deletion of a virtual machine (VM) serving as an environment in which each highest application (MEC App) operates. Each application may be executed by different companies, and therefore the virtualization manager is required to consider security, division of a resource to be assigned, and the like, but it is possible to apply a general cloud infrastructure technology.

An application platform service is an aggregate of common services that are characteristic of ME. A traffic offload function performs switching control such as routing between a case where a request from the UE is processed by an application on the ME server and a case where the request is processed by an application on the Internet (master application on a data server). In a case where each application on the ME server needs wireless status information such as intensity of a radio wave between a base station corresponding to (provided integrally with, for example) the ME server and the UE, radio network information services acquire information from a lower wireless network and provide the information to the application. Communication services provide a path for allowing each application on the ME server to communicate with the UE or an application on the Internet. In a case where a request for generation or operation of each application on the ME server is received, a service registry authenticates whether or not the application is legitimate, registers the application, and responds to an inquiry from other entities.

Each application in each VM operates on the application platform described above and provides various kinds of services to the UE, instead of the application on the Internet or in corporation with the application.

ME servers are expected to be installed in a large number of base stations, and therefore study of a structure for managing and linking a large number of ME servers is also required. A hosting infrastructure management system, an application platform management system, and an application management system manage corresponding entities on the ME server and link the entities.

### (3) Tendency of standardization

In Europe, industry specification groups (ISG) were established in the ETSI and standardization work of MEC was started in October, 2014. The standardization work is currently worked with a view to preparing a first specification by the end of 2016. More specifically, standardization of application programming interface (API) to realize MEC has been mainly worked under cooperation of ETSI ISG network function virtualization (NFV) and the 3GPP.

### (4) NFV

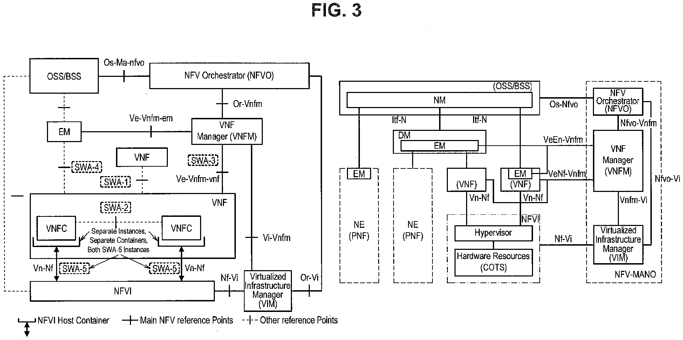

Next, an example of an architecture of the ME server realized by the VNF will be described with reference to FIGS. 3 to 5.

FIG. 3 is a diagram illustrating an example of an architecture of software-defined networking (SDN)/network functions virtualization (NFV). Note that FIG. 3 is a drawing generated with reference to "ETSI, 'GS NFV-SWA 001 V1.1.1 (2014-12),' December 2014, [accessed March 26, 2016], Internet <http://www.etsi.org/deliver/etsi_gs/NFV-SWA/001_099/001/01.01.01_60/gs_NFV-SWA001v010101p.pdf>."

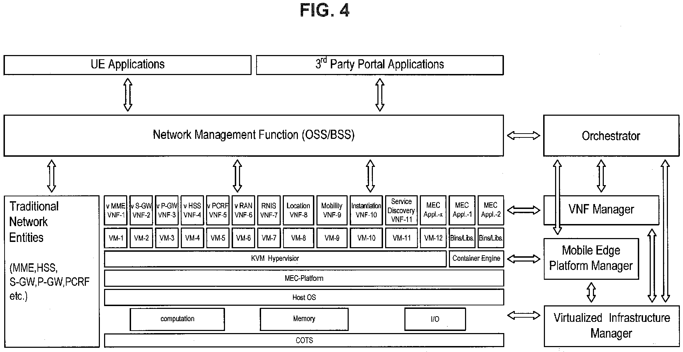

FIG. 4 is a diagram illustrating an example of an architecture of the ME server realized by the SDN/NFV. As illustrated in FIG. 4, applications mounted on various VNFs and VMs or containers are developed on the MEC platform. VNF-1 to VNF-5 are so-called 3GPP E-UTRAN function entities. Note that a 3GPP E-UTRAN function entity virtualized using the VNF is assumed to be expressed by attaching v to an entity name. For example, a vMME is a VNF obtained virtualizing an MME. VNF-7 to VNF-11 are service VNFs that are provided by the ME server. Appl.-x, Appl.-1, and Appl.-2 are applications mounted on the VMs or the containers.

The VNFs and the applications developed on the MEC platform are controlled by a VNF manager, a mobile edge platform manager, or a virtualized infrastructure manager. Each manager is controlled by a high-order orchestrator. Further, the whole ME server is controlled by a network management function. The network management function is a so-called operation support system (OSS)/business support system (BSS) function. The network management function can also be controlled by something other than an operator operating the network. For example, a UE application that is provided from the ME server can be exemplified as a control entity. Additionally, a third-party portal application of a service operator of a so-called over the top (OTT) system providing a service to the ME server can be exemplified as the control entity. The control entity can access a network management function in an authentication/authorization order.

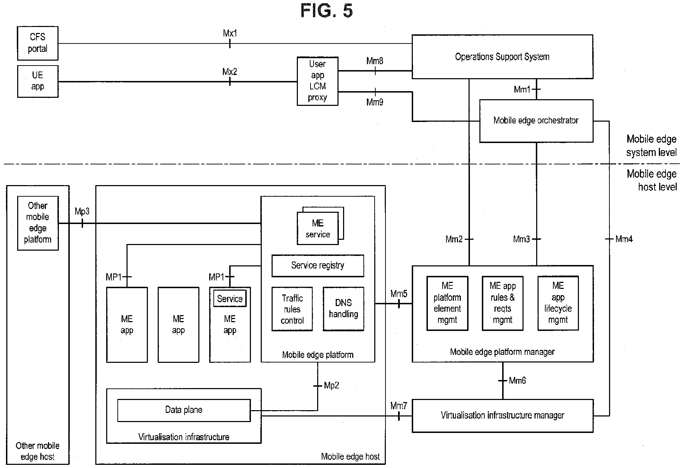

FIG. 5 is a diagram illustrating an example of a reference architecture related to the ME server. An architecture such as that in FIG. 5 can also be considered. Note that FIG. 5 is a drawing generated with reference to "ETSI, 'Draft ETSI GS MEC 003 V0.3.2 (2016-02),' February 2016, [accessed March 26, 2016], Internet <https://docbox.etsi.org/ISG/MEC/Open/GS_MEC_003v000302.pdf>."

### <1.2. Relay node>

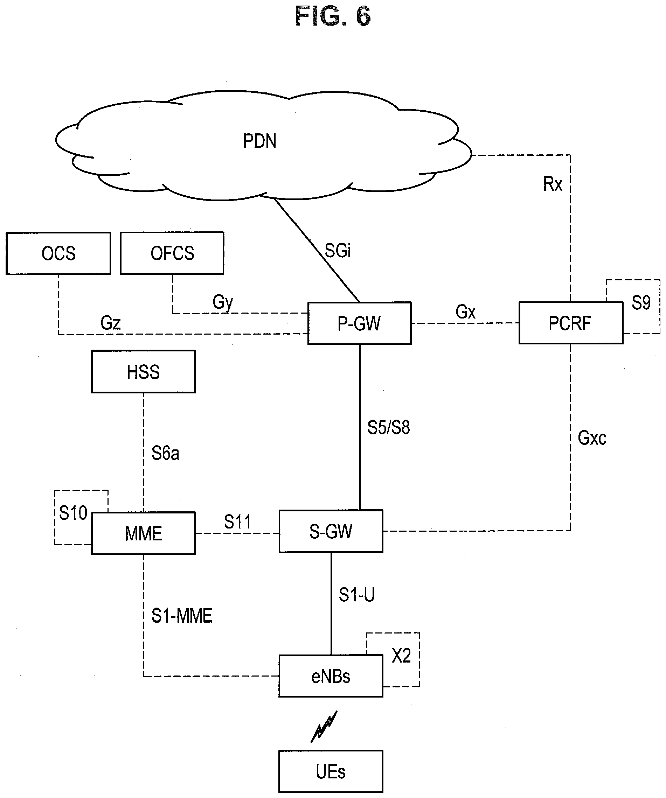

Next, an outline of a relay node (RN) to which a proposed protocol is applied will be described with reference to FIGS. 6 to 14.

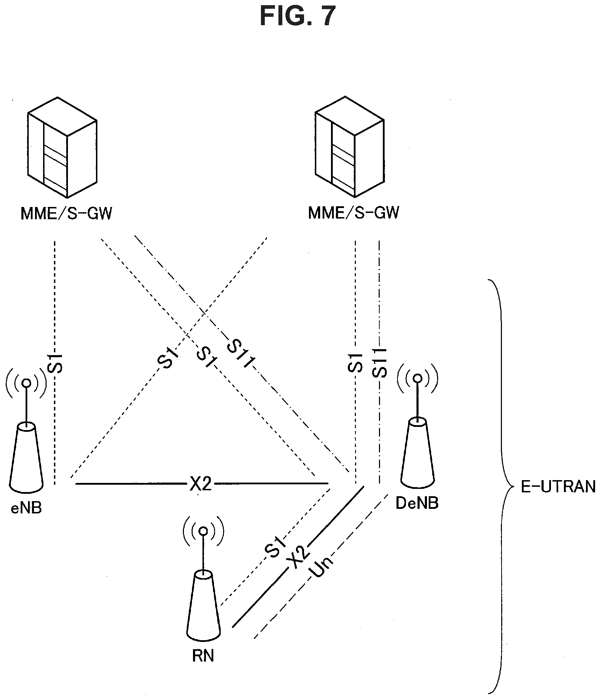

FIGS. 6 and 7 are explanatory diagrams for describing an example of an architecture of an evolved universal terrestrial radio access network (E-UTRAN).

FIG. 6 illustrates an example of a basic architecture of the EPC. A UE is a terminal device and also referred to as a "user." An evolved NodeB (eNB) is a base station. A packet data network (PDN) gateway (P-GW) is a connection point between the EPC and a PDN (for example, a concept including the Internet, an external IP network, a cloud, or the like) and exchanges a user packet with the PDN. A serving gateway (S-GW) is a connection point between the E-UTRAN and the EPC and provides a routing function and a transfer function for the user packet. An online charging system (OCS) is a functional entity that performs account control in real time. An offline charging system (OFCS) is a functional entity that performs accounting control offline. A policy and charging rule function (PCRF) is a functional entity that performs policy and accounting control. A mobility management entity (MME) is a functional entity that manages mobility. A home subscriber server (HSS) is a functional entity that manages subscriber information. In FIG. 3, solid lines indicate a user plane, and broken lines indicate a control plane.

The UE is connected to the eNB and connected to the EPC via the S-GW on the basis of the control of the MME and the HSS. Further, the UE is connected to the Internet (that is, the PDN) via the P-GW and connected with a content server or the like on the Internet on the basis of a request of an application on the UE. The establishment of the connection between the UE and the PDN is performed in accordance with a setting of a bearer. The bearer indicates a series of physical or logical paths for transferring user data.

FIG. 7 illustrates the E-UTRAN architecture that supports a relay node. A relay node (RN) is an entity that relays wireless communication performed by an UE. A DeNB is an eNB that is connected to the RN. In this specification, a DeNB is also referred to as an eNB for a brief description. As illustrated in FIG. 7, an S1 interface is set between the eNB and MME/S-GW. In addition, the S1 interface and an S11 interface are set between the DeNB and the MME/S-GW. Also, an X2 interface is set between the eNB and the DeNB. In addition, the S1 interface, the X2 interface, and a Uu interface are set between the DeNB and the relay node (RN).

The architecture of the E-UTRAN has been described above. Next, a protocol stack related to the RN will be descried.

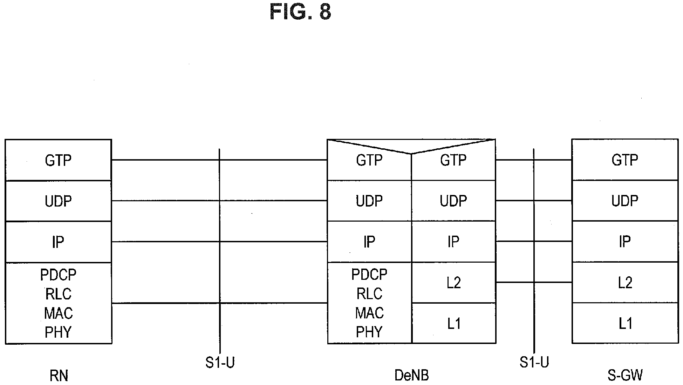

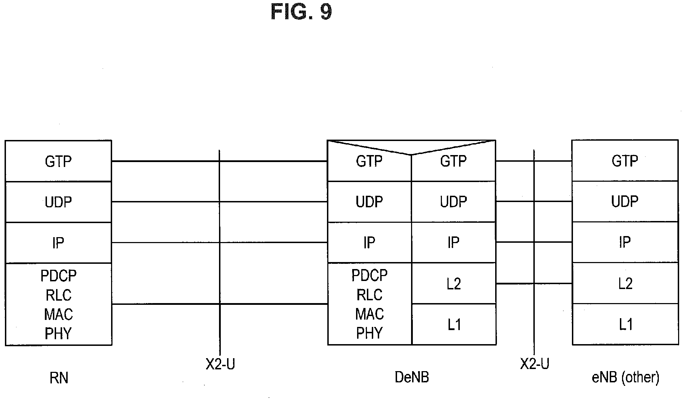

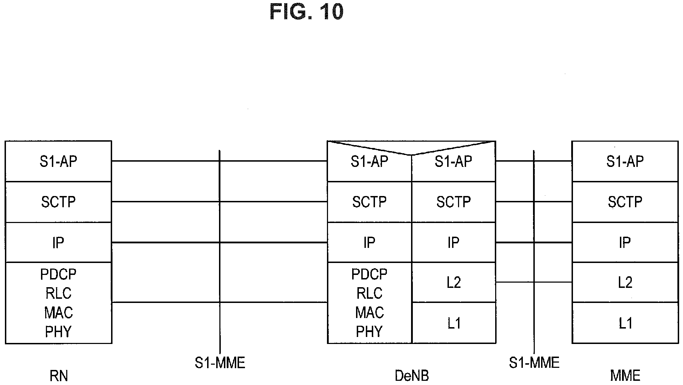

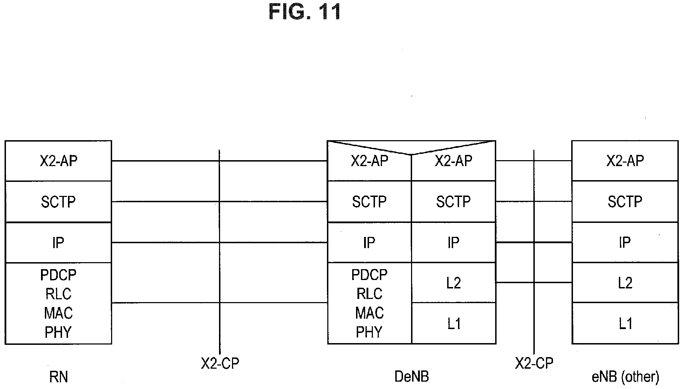

FIG. 8 is a diagram illustrating a protocol stack in an S1 user plane. FIG. 9 is a diagram illustrating a protocol stack in an X2 user plane. FIG. 10 is a diagram illustrating a protocol stack in an S1 control plane. FIG. 11 is a diagram illustrating a protocol stack in an X2 control plane. Here, all the "IPs" in FIGS. 8 to 11 are IPs in a transport layer. That is, an IP in a network layer has not been assumed for the relay node.

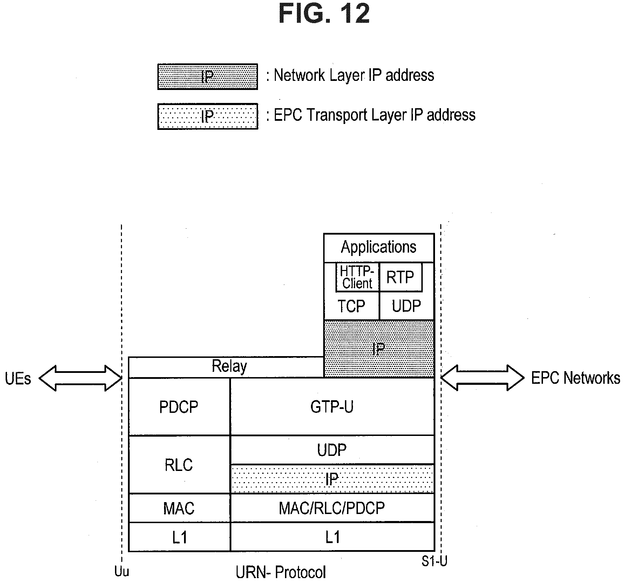

As illustrated in FIG. 12, an IP in the network layer may be set in the relay node.

FIG. 12 is a diagram illustrating an example of a protocol stack in an RN according to an embodiment of the present disclosure. As illustrated in FIG. 12, the RN has an IP address in the network layer in addition to the IP address in the EPC transport layer. The RN is referred to as a user-equipment-relay-node (URN) in some cases since the RN also functions as a UE. In the present specification, a URN that operates as a UE is also simply referred to as an RN.

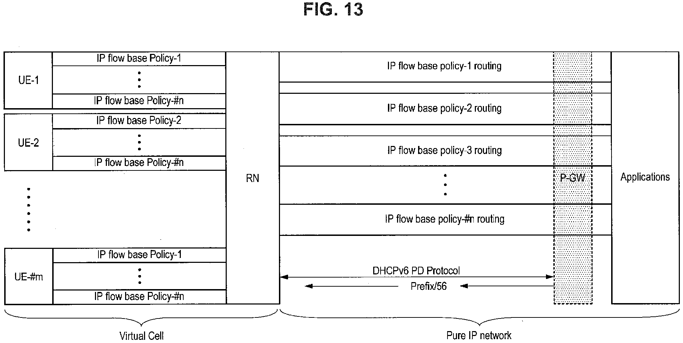

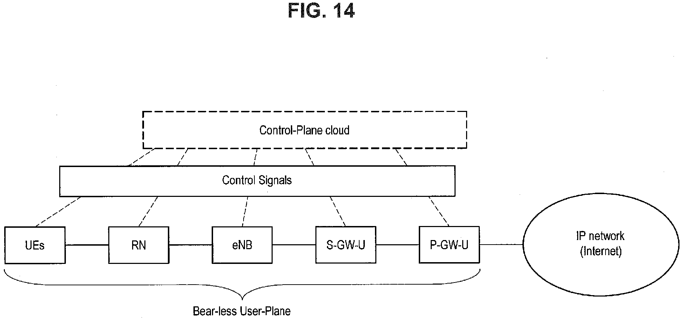

The proposed protocol can also be applied to an architecture in a next-generation network that is not compatible with EPC of existing 3GPP. Such an architecture will be described with reference to FIGS. 13 and 14.

FIGS. 13 and 14 are diagrams illustrating an example of an architecture of a next-generation network. FIG. 13 illustrates an architecture of a bearerless network that is realized by a so-called pure IP network. In this case, an IP flow is in charge of a role of the bearer. In this architecture, it is possible to realize IP transmittivity of the group of UEs connected to the RN without the mechanism such as a mobile IP, by commonly setting the prefix portions. FIG. 14 illustrates an architecture in which a control plane and a user plane are separated by utilizing a cloud.

### <1.3. Technical problems>

According to the MEC technology, a UE can be provided with a service by, for example, an optimum ME server such as a nearby ME server. However, a service may not necessarily be constantly provided by the optimum ME server. For example, when a UE has moved, the UE becomes physically distant from the ME server which is a service providing source in some cases. Therefore, an application which is being used can preferably be moved from the original ME server to a more appropriate ME server.

However, a technology for moving an application while maintaining movement transmittivity has not been proposed until now.

Instead, for example, a dynamic domain name system (DNS) system (DDNS) technology is considered to enable connection to an application after a UE moves. However, the DDNS has the following problems.

For example, it is necessary to update a record of the DDNS with each movement of an application. In addition, it is necessary to mount a function in which a UE frequently inquires about updating of the record of the DDNS or periodically confirms updating. In addition, in order to perform such a process, it takes some time until an application can be used after movement. In addition, in order to realize movement of an application while a UE is allowed to continuously use the application, a so-called live migration function of a service (that is, an instance) is separately necessary.

Accordingly, a protocol capable of realizing movement transmittivity of an application moving between ME servers will be proposed.

Note that the foregoing Non-Patent Literature 1 also discloses a technology related to movement of an application. More specifically, a MobiScud control function (MC function) which is a logical function first recognizes handover of a UE by capturing a control signal of the existing 3GPP. Then, a VM which is being used by the UE is moved from a cloud corresponding to a source eNB to a cloud corresponding to a target eNB between an MC controlling the target eNB and an MC controlling the source eNB.

In the foregoing Non-Patent Literature 1, movement transmittivity of a VM is not disclosed. However, the proposed protocol focuses on an IP address of an instance realized with a VM or a container and realizes movement transmittivity of the IP address. Further, the proposed protocol can realize movement of an instance and movement transmittivity and can lower an updating frequency of a routing table in a relay node by appropriately performing address distribution management with regard to a newly activated instance.

### <<2. Configuration example>>

### <2.1. Schematic configuration example of system>

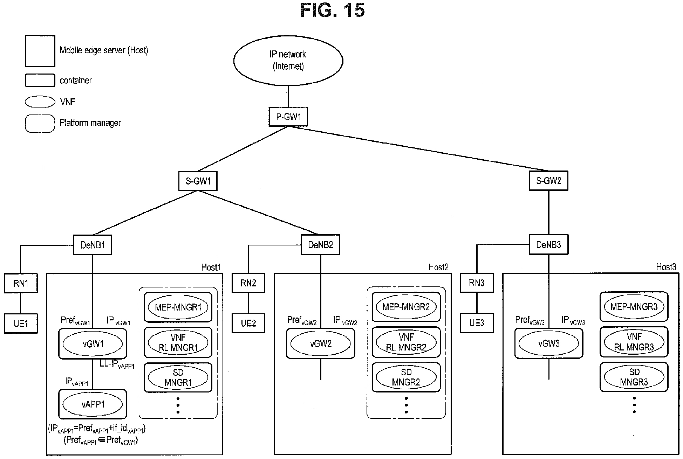

FIG. 15 is a diagram illustrating an example of a schematic configuration of a system according to an embodiment of the present disclosure. As illustrated in FIG. 15, the system according to the embodiment has an E-UTRAN architecture defined in 3GPP and includes P-GWs, S-GWs, DeNBs, RNs, UEs, and hosts. An RN 1 is connected to a DeNB 1 and the UE 1 is connected to the RN 1. An RN 2 is connected to a DeNB 2 and the UE 2 is connected to the RN 2. An RN 3 is connected to a DeNB 3 and the UE 3 is connected to the RN 3. In addition, the Host 1 is connected to the DeNB 1, the Host 2 is connected to the DeNB 2, and the Host 3 is connected to the DeNB 3. The host may be integrated with the DeNB or may be formed separately.

Note that a cell formed by RNs is also referred to as a moving cell or a virtual cell. In addition, a moving cell is further included in a moving cell in some cases and the structure of such a hierarchical moving cell is also referred to as a nested structure.

In FIG. 15, constituent elements of the logical function included in the host are illustrated within a frame of the host. As illustrated in FIG. 15, the host includes a vGW, a vAPP, and a platform manager. The vGW is a VNF that functions as a gateway. The vAPP is a VNF that functions as an instance of an application or a service mounted on a VM or a container. The platform manager has, for example, a function of managing a VNF operating on the platform. The platform manager includes a mobile edge prefix (MEP)-manager (MNGR), a VNF relocation (RL) MNGR, a service discovery (SD) MNGR, and the like. The MEP-MNGR plays a function of performing management of IP addresses, particularly, management of prefixes. The VNF RL MNGR plays a function of exchanging information and establishing a tunnel necessary to move the VNF. The SD MNGR plays a function related to service discovery.

Note that an IP address of each entity is expressed by attaching a subscript entity name to "IP." For example, an IP address of the vAPP 1 is referred to as IP_{vAPP1}. In addition, an IP address of the vGW 1 is referred to as IP_{vGW1}. Here, IP_{vGW1} is also expressed as an IP address of an upstream (that is, uplink) interface of the vGW 1. In the present specification, an IP address is assumed to be an IPv6 address.

### <2.2. Configuration example of UE>

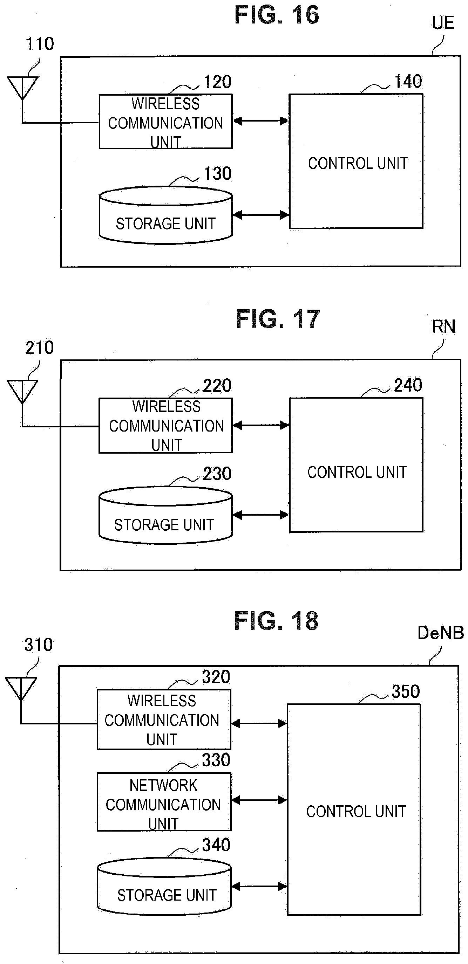

Next, an example of a configuration of the UE according to the embodiment of the present disclosure will be described with reference to FIG. 16. FIG. 16 is a block diagram illustrating an example of the configuration of the UE according to the embodiment of the present disclosure. Referring to FIG. 16, the UE includes an antenna unit 110, a wireless communication unit 120, a storage unit 130, and a control unit 140.

### (1) Antenna unit 110

The antenna unit 110 releases a signal output from the wireless communication unit 120 as electric waves into a space. In addition, the antenna unit 110 converts the electric waves in the space into a signal and outputs the signal to the wireless communication unit 120.

### (2) Wireless communication unit 120

The wireless communication unit 120 transmits and receives signals. The wireless communication unit 120 receives a downlink signal from the eNB or the RN and transmits an uplink signal to the eNB or the RN.

### (3) Storage unit 130

The storage unit 130 temporarily or permanently stores a program and various kinds of data for operations of the UE.

### (4) Control unit 140

The control unit 140 provides various functions of the UE. The UE operates on the basis of control by the control unit 140. An operation of the UE based on the control by the control unit 140 will be described in detail below.

### <2.3. Configuration example of RN>

Next, an example of a configuration of the RN according to the embodiment of the present disclosure will be described with reference to FIG. 17. FIG. 17 is a block diagram illustrating an example of the configuration of the RN according to the embodiment of the present disclosure. Referring to FIG. 17, the RN includes an antenna unit 210, a wireless communication unit 220, a storage unit 230, and a control unit 240.

### (1) Antenna unit 210

The antenna unit 210 releases a signal output from the wireless communication unit 220 as electric waves into a space. In addition, the antenna unit 210 converts the electric waves in the space into a signal and outputs the signal to the wireless communication unit 220.

### (2) Wireless communication unit 220

The wireless communication unit 220 transmits and receives signals. For example, the wireless communication unit 220 receives a downlink signal from an upstream DeNB or another RN to relay the downlink signal to a downstream UE or RN. In addition, for example, the wireless communication unit 220 receives an uplink signal from a downstream UE or RN to relay the uplink signal to an upstream DeNB or another RN.

### (3) Storage unit 230

The storage unit 230 temporarily or permanently stores a program and various kinds of data for operations of the RN.

### (4) Control unit 240

The control unit 240 provides various functions of the RN. The RN operates on the basis of control by the control unit 240. An operation of the RN based on the control by the control unit 240 will be described in detail below.

### <2.4. Configuration example of DeNB>

Next, an example of a configuration of the DeNB according to the embodiment of the present disclosure will be described with reference to FIG. 18. FIG. 18 is a block diagram illustrating an example of the configuration of the DeNB according to the embodiment of the present disclosure. Referring to FIG. 17, the DeNB includes an antenna unit 310, a wireless communication unit 320, a network communication unit 330, a storage unit 340, and a control unit 350.

### (1) Antenna unit 310

The antenna unit 310 releases a signal output from the wireless communication unit 320 as electric waves into a space. In addition, the antenna unit 310 converts the electric waves in the space into a signal and outputs the signal to the wireless communication unit 320.

### (2) Wireless communication unit 320

The wireless communication unit 320 transmits and receives signals. For example, the wireless communication unit 320 transmits a downlink signal to a downstream UE or RN and receives an uplink signal from a downstream UE or RN.

### (3) Network communication unit 330

The network communication unit 330 transmits and receives information. For example, the network communication unit 330 transmits information to other nodes and receives information from the other nodes. For example, the other nodes include other eNBs and core network nodes.

### (4) Storage unit 340

The storage unit 340 temporarily or permanently stores a program and various kinds of data for operations of the eNB.

### (5) Control unit 350

The control unit 350 provides various functions of the DeNB. The DeNB operates on the basis of control by the control unit 350. An operation of the DeNB based on the control by the control unit 350 will be described in detail below. Note that a configuration example of the eNB is the same as the above-described configuration example of the DeNB.

### <2.5. Configuration example of host>

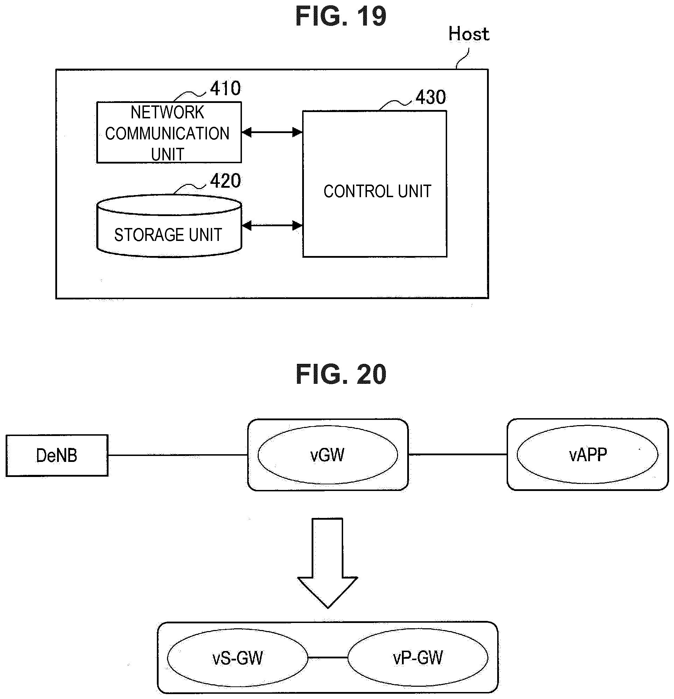

Next, an example of a configuration of the host according to an embodiment of the present disclosure will be described with reference to FIG. 19. Herein, the host refers to an ME server. FIG. 19 is a block diagram illustrating an example of a configuration of a host according to the embodiment of the present disclosure. Referring to FIG. 19, the host includes a network communication unit 410, a storage unit 420, and a control unit 430.

### (1) Network communication unit 410

The network communication unit 410 transmits and receives information. For example, the network communication unit 410 transmits information to other nodes and receives information from the other nodes. For example, the other nodes include the DeNB, the eNB, the RN, and the like corresponding to the host.

### (2) Storage unit 420

The storage unit 420 temporarily or permanently stores various kinds of data and a program for an operation of the host.

### (3) Control unit 430

The control unit 430 provides various functions of the host. The host operates on the basis of control by the control unit 430. An operation of the host based on the control by the control unit 430 will be described in detail below.

### <<3. Technical features>>

### <3.1. Allocation of IP address>

Hereinafter, an IP address will be described focusing on the Host 1. The matters to be described below are similar to those of hosts other than the Host 1.

### (1) Initial state

For example, a prefix Pref_{vGW1} (for example, /60) can be allocated in advance to the vGW 1 by a function such as IPv6 prefix delegation.

### (2) Activating VNF

The MEP-MNGR 1 generates a container, and generates the vAPP 1 and causes the vAPP 1 to be activated as the VNF realizing an application or a service to be provided.

The MEP-MNGR 1 manages the prefix Pref_{vGW1} and allocates a prefix Pref_{VNF} (/64) from the vGW 1 to a generated VNF whenever the VNF is generated in the Host 1. For example, Pref_{vAPP1} (/64) is allocated to the vAPP 1. Here, Pref_{vAPP1} ∈ Pref_{vGW1}. That is, 60 high-order bits of Pref_{vAPP1} are identical to Pref_{vGw1}. A subordinate VNF of the vGW 1 has a prefix of which at least a part is common through such allocation.

Then, the MEP-MNGR 1 generates IP_{vAPP1} and provides an interface ID portion (if_id_{vAPP1}) as an argument to the vAPP 1 when the vAPP 1 is activated. Thus, the vAPP 1 acquires if_id_{vAPP1}. Here, IP_{vAPP1} = Pref_{vAPP1} + if_id_{vAPP1}. In addition, IP_{vAPP1} ∈ Pref_{vGW1}.

Subsequently, the MEP-MNGR 1 selects LL-IP_{vAPP1} as a link local address of a downstream interface of the vGW 1 and notifies the vGW 1 of LL-IP_{vAPP1}. The vGW 1 notifies the vAPP 1 of a router advertisement (RA) message including Pref_{vAPP1} which is a prefix of IP_{vAPP1} using LL-IP_{vAPP1}. Thus, the vAPP 1 acquires Pref_{vAPP1}. Here, a source IP address of the RA message is assumed to be LL-IP_{vAPP1}. That is, the source IP address of the RA message is a default route for the vAPP 1.

In this way, the vAPP 1 generates IP_{vAPP1} which is an IP address of the vAPP 1 from the acquired Pref_{vAPP1} and if_id_{vAPP1}.

### <3.2. Communication route>

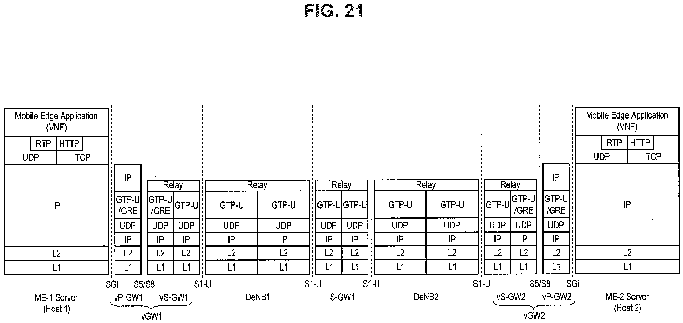

Hereinafter, a communication route will be described with reference to FIGS. 20 and 21.

FIG. 20 is a diagram for describing an example of a configuration of the vGW according to the embodiment. As illustrated in FIG. 20, the vGW may include a vS-GW which is a virtual S-GW and a vP-GW which is a virtual P-GW.

FIG. 21 is a diagram illustrating a protocol stack in communication between hosts according to the embodiment. As illustrated in FIG. 21, a VNF operating as the Host 1 can communicate with a VNF operating as the Host 2 via the vGW 1, the DeNB 1, the S-GW 1, the DeNB 2, and the vGW 2. In this way, by applying the structure of 3GPP E-UTRAN, it is possible to suppress a change to an existing protocol to the minimum and it is possible to realize the proposed protocol.

Next, a communication route of the vAPP 1 in the system configuration illustrated in FIG. 15 will be described.

First, a communication route between the P-GW 1 and the vAPP 1 in communication with a PDN will be described. The P-GW 1 and the vAPP 1 operating on the Host 1 may communicate by normal IP routing. In addition, the P-GW 1 and the vAPP 1 operating on the Host 1 may communicate using a bearer established via the S-GW 1, the DeNB 1, and the Host 1.

Next, a communication route between each UE and the vAPP 1 will be described. The UE 1 connected to the DeNB 1 and the vAPP 1 operating on the Host 1 can communicate using a bearer established via the RN 1, the DeNB 1, and a vGW. The UE 2 connected to the DeNB 2 and the vAPP 1 operating on the Host 1 can communicate using a bearer established via the RN 2, the DeNB 2, the S-GW 1, the DeNB 1, and a vGW. The UE 3 connected to the DeNB 3 and the vAPP 1 operating on the Host 1 can communicate using a bearer established via the RN 3, the DeNB 3, the S-GW 2, the P-GW, the S-GW 1, the DeNB 1, and the vGW 1.

For example, the UE can communicate with a vGW using the bearer by designating the vGW using an access point name (APN).

### <3.3. Movement of VNF>

In this section, it is assumed that the host is associated with DeNBs and the vAPP 1 moves from the Host 1 corresponding to the DeNB 1 to the Host 2 corresponding to the DeNB 2.

A wireless communication device (for example, the DeNB 1) transmits a message causing a movement target VNF operating on a corresponding server (that is, the Host 1) inside an evolved packet system (EPS) to move to another host (that is, the Host 2) corresponding to another wireless communication device (for example, the DeNB 2) to the other wireless communication device (that is, the DeNB 2).

This message includes connection information of a virtual gateway (that is, the vGW 1) operating on the Host 1. The connection information may include the IP address of the vGW 1. In addition, the connection information may include the APN of the vGW 1. Then, the connection information may be transmitted to the Host 2 by the DeNB 2. Thus, the Host 2 (that is, the vGW 2) of a movement destination and the Host 1 (that is, the vGW 1) of a movement source can negotiate movement of the VNF. Then, in a case where it is determined in the negotiation that the movement of the VNF is possible, the Host 2 causes the movement target VNF to move to the server on the basis of the message received by the corresponding the DeNB 2 from the DeNB 1 corresponding to the Host 1. In this way, the connection information of the virtual gateway operating on the host of the movement source is shared with the host of the movement destination so that the movement of the VNF is possible.

The movement of the VNF can be performed using any of various situations as a trigger.

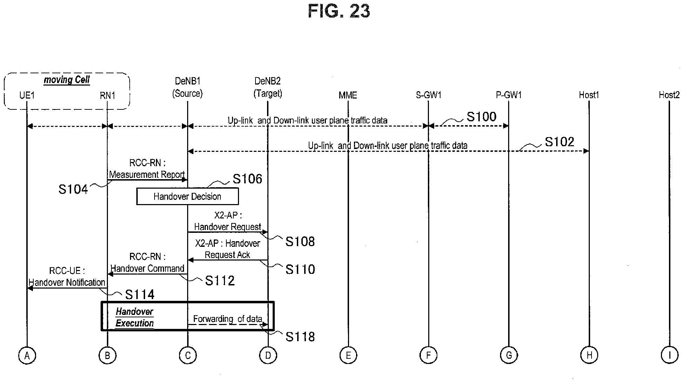

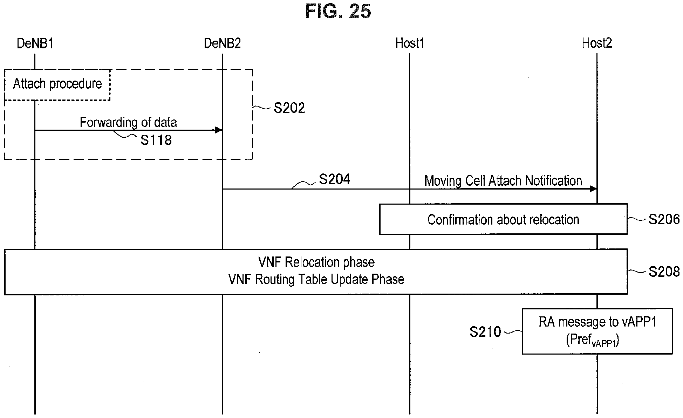

As a first example, the movement of the VNF can be performed using occurrence of handover of a terminal device (for example, a UE or an RN) using the VNF as a trigger. In this case, the message including the connection information is transmitted using occurrence of handover from a subordinate cell of the DeNB 1 (including a cell formed by the DeNB 1, a moving cell connected to the cell, or a moving cell with a nested structure) to a subordinate cell of the DeNB 2 by a terminal device connected to the VNF as a trigger. Specifically, the message including the connection information is transmitted from the DeNB 1 to the DeNB 2 in a step (step S118 to be described below with reference to FIG. 23) for information transfer from the source DeNB 1 in the handover procedure to the DeNB 2. Then, the connection information is transmitted from the DeNB 2 to the Host 2 by moving cell attach notification (step S204 to be described below with reference to FIG. 25). When the occurrence of the handover is triggered, it is possible to shorten a communication route to the VNF extending in association with the handover.

As a second example, the movement of the VNF can be performed using recognition of handover of a terminal device using the VNF as a trigger. In this case, the DeNB 1 may monitor an IP address of a terminal device of a communication partner of the VNF to recognize handover on the basis of the IP address. For example, the DeNB 1 recognizes handover by monitoring an IP address of a terminal device connected to the vAPP 1 via the vGW 1 of the Host 1 and detecting the IP of a terminal device not connected to a subordinate cell. In this case, apart from a handover procedure, the message including the connection information can be transmitted. When the recognition of the handover is triggered, it is possible to shorten a communication route to the VNF extending in association with the handover.

As a third example, the movement of the VNF can be performed using traffic congestion as a trigger. In this case, the message including the connection information is transmitted using the fact that a communication situation related to the VNF satisfies a predetermined condition as a trigger. As the predetermined condition, for example, a condition that a reference signal received quality (RSRQ) of a UE connected to the VNF is less than a predetermined threshold or the like can be exemplified. When the traffic congestion is triggered, it is possible to avoid the traffic congestion. In addition, in this example, the DeNB can select the host of the movement destination. Further, the DeNB can determine which VNF is to be moved and can select, for example, a VNF with a high load as a movement target. This selection can be performed, for example, when the DeNB 1 requests the SD MNGR 1 of the Host 1 to search for a nearby host.

In the second example and the third example, the connection information of the vGW 1 is transmitted, for example, from the vGW 1 to the vGW 2 via the DeNB 1 and the DeNB 2. The message including the connection information of the vGW1 can be referred to as a relocation request. In a case where the relocation request is transmitted to the vGW 2, processes subsequent to step S206 of a VNF relocation procedure to be described below with reference to FIG. 25 are performed, and the movement of the VNF can be performed.

Note that the connection information may be shared by a manager managing the MEC platform irrespective of which trigger is used to move the VNF. In this case, the moving cell attach notification and the relocation request can serve as a message for simply requesting the movement of the VNF.

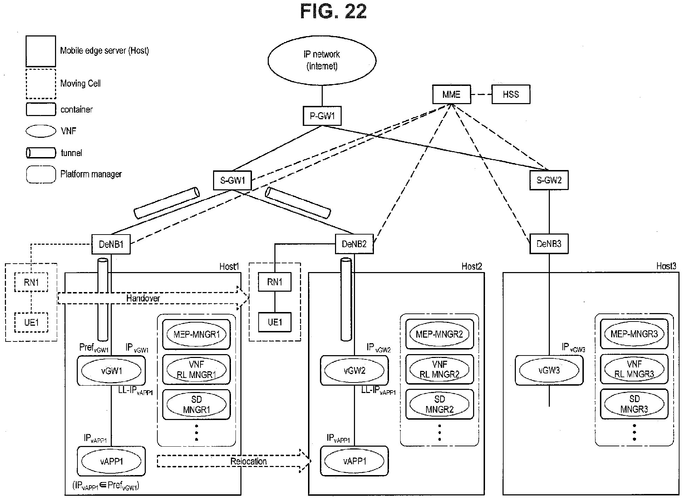

Hereinafter, the movement of the VNF related to the foregoing first example will be described as an example with reference to FIGS. 22 to 27.

FIG. 22 is an explanatory view for describing an example of the movement of the VNF according to the embodiment. In this section, as illustrated in FIG. 22, in the system configuration example illustrated in FIG. 15, a situation in which the RN 1 and the UE 1 execute handover to the DeNB 2 and the vAPP1 accordingly moves from the Host 1 to the Host 2 is assumed.

### (1) Handover procedure

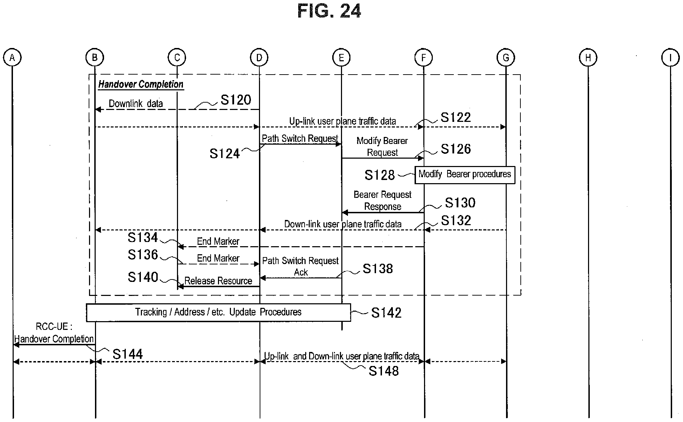

First, an example of a flow of processes related to the handover procedure will be described with reference to FIGS. 23 and 24.

FIGS. 23 and 24 are sequence diagrams illustrating an example of a flow of processes related to a handover procedure by the RN 1 according to the embodiment. In this sequence, the UE 1, the RN 1, the DeNB 1, the DeNB 2, the MME, the S-GW1, the P-GW 1, and the Host 1 are involved. In addition, the UE 1 and the RN 1 form a moving cell. In addition, the DeNB 1 is a source eNB and the DeNB 2 is a target eNB.

As illustrated in FIG. 23, the UE 1, the RN 1, the DeNB 1, the S-GW 5A, and the P-GW 1 are in a state in which they transmit and receive uplink and downlink user plane traffic data first (Step S100). In addition, the DeNB 1 and the Host 1 are in a state in which the uplink and downlink user plane traffic data are transmitted and received (step S102). In this state, the RN 1 transmits a measurement report (RCC-URN: Measurement Report) to the DeNB 1 (Step S104). Next, the DeNB 1 performs handover determination (Handover Decision) (Step S106). Then, the DeNB 1 transmits a handover request (X2-AP: Handover Request) to the DeNB 2 (Step S108). Next, the DeNB 1 transmits a handover request ACK (X2-AP: Handover Request Ack) to the DeNB 1 (Step S110). Then, the DeNB 1 transmits a handover command (RCC-URN: Handover Command) to the RN 1 (Step S112). Next, the RN 1 transmits a handover notification (RCC-UEs: Handover Notification) to the subordinate UE 1 (Step S114). Then, the DeNB 1 transfers data (Forwarding of data) to the DeNB 2 for executing handover (Handover Execution) (Step S118).

Next, the DeNB 2 transmits downlink data (Downlink data) to the RN 1 for completing handover (Handover Completion) as illustrated in FIG. 24 (Step S120). This makes it possible for the RN 1 to transmit uplink user plane traffic data to the P-GW 1 via the DeNB 2 and the S-GW 1 (Step S122). Next, the DeNB 2 transmits a path switch request (Path Switch Request) to the MME (Step S124). Then, the MME transmits a bearer modification request (Modify Bearer Request) to the S-GW 1 (Step S126). Next, the S-GW 1 performs bearer modification procedures (Modify Bearer procedures) with the P-GW 1 (Step S128). Then, the S-GW 1 transmits a bearer modification response (Modify Bearer Response) to the MME (Step S130). This makes it possible for the P-GW 1 to transmit downlink user plane traffic data to the RN 1 via the S-GW 1 and the DeNB 2 (Step S132). Then, the S-GW 1 transmits an end marker (End Marker) to the DeNB 1 (Step S134). Next, the DeNB 1 transmits the end marker (End Marker) to the DeNB 2 (Step S136). Then, the MME transmits a path switch request ACK (Path Switch Request Ack) to the DeNB 2 (Step S138). Next, the DeNB 2 transmits a release resource (Release Resource) to the DeNB 1 (Step S140). Then, the RN 1 performs update procedures (Tracking/Address/etc. Update procedures) of tracking, addresses, and the like between the DeNB 2 and the MME (Step S142). Next, the RN 1 transmits handover completion (RCC-UEs: Handover Completion) to the subordinate UE 1 (Step S144). Then, the UE 1, the RN 1, the DeNB 2, the S-GW 1, and the P-GW 1 transmit and receive uplink and downlink user plane traffic data (Step S148).

### (2) VNF relocation procedure

Next, an example of processes related to the VNF relocation procedure will be described with reference to FIGS. 25 to 27.

### (2.1) VNF relocation procedure

FIG. 25 is a sequence diagram illustrating an example of a flow of a process related to the VNF relocation procedure performed in the system according to the embodiment. As illustrated in FIG. 25, the DeNB 1, the DeNB 2, the Host 1, and the Host 2 are involved in this sequence. The other entities can be involved, but are omitted herein.

First, the DeNB 1 and the DeNB 2 perform an attach procedure (step S202). Herein, the process has been described above with reference to FIGS. 23 and 24, and the RN 1 and the UE 1 execute the handover from the DeNB 1 to the DeNB 2. The step to be focused on in this attach procedure is the data transfer from the DeNB 1 to the DeNB 2 extracted in FIG. 25 (step S118).

In this process, the X2 interface defined in the 3GPP is established as a logical interface between the DeNB 1 and the DeNB 2. Note that the interface physically passes through the S-GW 1. The UE 1 and the RN 1 are connected to the vAPP 1 via the DeNB 2, the S-GW 1, the DeNB 1, and the vGW 1 even after the handover by using this interface to continuously use a service provided from the vAPP 1.

In addition, in this process, the connection information of the vGW 1 is transmitted using the X2 interface from the DeNB 1 to the DeNB 2. The connection information to be transmitted includes, for example, an IP address and/or an APN.

The attach procedure (step S202) has been described above.

After the attach procedure is completed, the DeNB 2 transmits the moving cell attach notification to, for example, the Host 2 (for example, the VNF RL MNGR 2) (step S204). This message is a message for notifying that the moving cell is newly attached. In addition, this message can include the connection information of the vGW 1 acquired in the foregoing step S202. Note that the DeNB 2 can recognize that the attach of the moving cell is completed in the foregoing step S142.

Subsequently, the Host 1 (for example, the vGW 1) and the Host 2 (for example, the vGW 2) perform negotiation related to the movement of the vAPP 1 (step S206). A communication route between the vGW 1 and the vGW 2 in the negotiation passes through the DeNB 1, the S-GW 1, and the DeNB 2. Content of the negotiation is work for confirming whether the Host 2 may store the movement target vAPP 1 (for example, confirming authentication policy and contract information, and the like), work for confirming whether or not a resource capable of realizing a service of the vAPP 1 can be used in the Host 2, or the like. In a case where it is determined that the movement of the vAPP 1 in this negotiation is possible, the Host 2 (for example, the MEP-MNGR 2) of the movement destination acquires the IP address of the vAPP 1, more specifically, IP_{vAPP1} and LL-IP_{vAPP1}, from the Host 1 (for example, the MEP-MNGR 1) of the movement source. Note that IP_{vAPP1} and LL-IP_{vAPP1} may be acquired in step S302 included in the process of step S208 to be described below. IP_{vAPP1} and LL-IP_{vAPP1} are transmitted via, for example, the vGW 2, the DeNB 2, the S-GW 1, the DeNB 1, and the vGW 1. Since the IP address in the movement source is also shared by the movement destination, the same IP address can be allocated to the VNF after the movement.

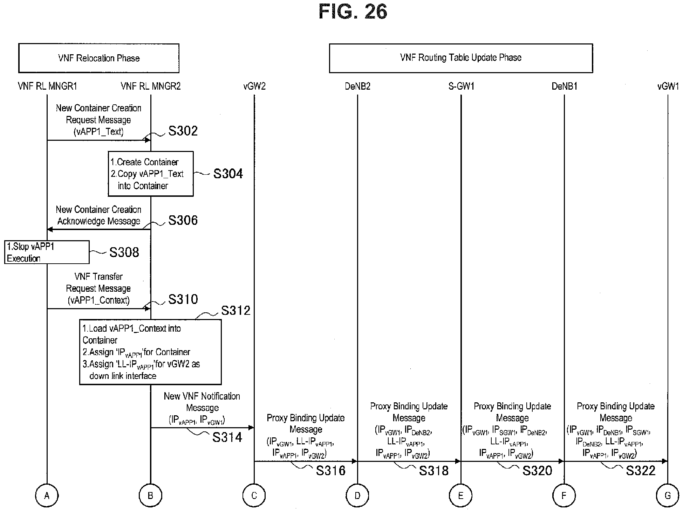

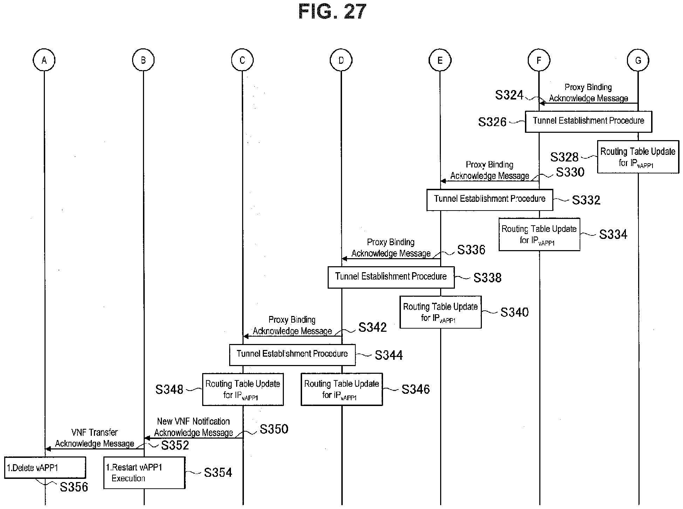

Then, the DeNB 1, the DeNB 2, the Host 1, and the Host 2 perform a process related to the VNF relocation phase and a VNF routing table update phase (step S208). The process herein will be described in detail below with reference to FIGS. 26 and 27. In response to this process, the vAPP1 is moved from the Host 1 to the Host 2 and the execution of the vAPP1 in the Host 2 is resumed.

Thereafter, the Host 2 (for example, the vGW 2) transmits a router advertisement (RA) message including the prefix Pref_{vAPP1} of IP_{vAPP1} to the activated vAPP 1 (step S210). That is, the Host 2 allocates the same prefix as the IP address allocated before the movement to the movement target VNF (that is, the vAPP 1) moving from the Host 1 and notifies the VNF of a message including the prefix. When the RA message is received, the vAPP 1 can continuously use IP_{vAPP1} which is the same IP address before the movement. Thus, the UE 1 and the RN 1 can continuously use a service provided from the vAPP 1 without being conscious of the movement of the vAPP 1. In addition, the vAPP 1 can also operate without being conscious of the movement. Here, the source IP address of the RA message is LL-IP_{vAPP1}. Accordingly, the vAPP 1 can continuously use LL-IP_{vAPP1} as a default route.

### (2.2) VNF relocation phase and routing table update phase

Next, the VNF relocation phase and the routing table update phase will be described in detail with reference to FIGS. 26 and 27.

FIGS. 26 and 27 are sequence diagrams illustrating an example of a flow of processes related to the VNF relocation phase and the routing table update phase performed in the system according to the embodiment. As illustrated in FIG. 26, the VNF RL MNGR 1, the VNF RL MNGR 2, the vGW 2, the DeNB 2, the S-GW 1, the DeNB 1, and the vGW 1 are involved in this sequence.

### - VNF relocation phase

First, the VNF relocation phase will be described.

The Host 2 (for example, the VNF RL MNGR 2) of the movement destination performs the movement of the movement target VNF to the Host 2 by newly activating the VNF using information regarding the movement target VNF (for example, the vAPP 1) operating on the Host 1 of the movement source as an input. That is, the movement of the VNF is realized through copying and new activation of information regarding the VNF. The Host 2 (for example, the VNF RL MNGR 2) of the movement destination acquires static information and dynamic information regarding the movement target VNF (for example, the vAPP 1) step by step. Thus, it is possible to perform the movement of the VNF more stably.

Hereinafter, a flow of specific processes will be described.

As illustrated in FIG. 26, the VNF RL MNGR 1 first transmits a new container generation request message (new container request message) to the VNF RL MNGR 2 (step S302). This message includes vAPP1_Text which is the static information of the vAPP 1 which is the movement target VNF. The static information is information which is not changed in accordance with execution.

Subsequently, the VNF RL MNGR 2 generates a container and copies (that is, loads) vAPP1_Text to the generated container (step S304). Subsequently, the VNF RL MNGR 2 transmits a new container creation acknowledge message to the VNF RL MNGR 1 (step S306). Subsequently, the VNF RL MNGR 1 executes stopping the vAPP 1 (step S308).

Subsequently, the VNF RL MNGR 1 transmits a VNF transfer request message to the VNF RL MNGR 2 (step S310). This message includes vAPP1_Context which is the dynamic information of the vAPP 1 which is the movement target VNF. The dynamic information is information which can be changed in accordance with execution. For example, as the dynamic information, a data segment of a process, a stack segment, a value of a register group, and the like can be exemplified.

Subsequently, the VNF RL MNGR 2 copies (that is, loads) vAPP1_Context to the container in which vAPP1_Text is copied, allocates IP_{vAPP1} to the container and allocates LL-IP_{vAPP1} to a downlink interface of the vGW 2 (step S312). Then, the VNF RL MNGR 2 connects an uplink interface of the container to the downlink interface of the vGW 2 with a virtual link.

Thereafter, the routing table update phase (steps S314 to S350) is executed. The routing table update phase will be described in detail below.

After the routing table update phase, as illustrated in FIG. 27, the VNF RL MNGR 2 transmits a VNF transfer acknowledge message to the VNF RL MNGR 1 (step S352). Subsequently, the VNF RL MNGR 2 executes restarting the vAPP 1 (step S354). In addition, the VNF RL MNGR 1 deletes the vAPP 1 (step S356).

### - Routing table update phase

Next, the routing table update phase will be described.

The Host 2 (for example, the vGW 2) of the movement destination updates the routing table of each entity and establishes a tunnel (for example, a bearer) with the Host 1 (for example, the vGW 1) of the movement source. The bearer physically passes through the DeNB and the S-GW. That is, the DeNB 2 corresponding to the Host 2 of the movement destination and the DeNB 1 corresponding to the Host 1 of the movement source establish the bearer for communication between the hosts. The bearer enables, for example, another VNF of the Host 1 to use the vAPP 1 via the tunnel or enables the UE connected to the DeNB 1 to use the vAPP 1 via the tunnel even after the vAPP1 is moved to the Host 2. Note that the Host 2 (for example, the vGW 2) transmits a proxy biding update (PBU) message to establish a bearer.

Hereinafter, a flow of specific processes will be described.

First, as illustrated in FIG. 26, the VNF RL MNGR 2 transmits a new VNF notification message to the vGW 2 (step S314). This message is a message for notifying that the new VNF is connected (that is, the VNF is moved). This message includes IP_{vAPP1} which is an IP address of the vAPP 1 which is the movement target VNF and IP_{vGW1} which is an IP address of the vGW 1 connected when the vAPP 1 is first activated.

Subsequently, the vGW 2 transmits the PBU message to the DeNB 2 (step S316). This message includes LL-IP_{vAPP1}, IP_{vAPP1}, and IP_{vGW2}. In addition, this message may include IP_{vGW1} which is the IP address of the vGW1 which is a final destination.

Subsequently, the DeNB 2 transmits the PBU message to the S-GW 1 (step S318). This message includes IP_{vGW1}, IP_{DeNB2}, LL-IP_{vAPP1}, IP_{vAPP1}, and IP_{vGW2}.

Subsequently, the S-GW 1 transmits the PBU message to the DeNB 1 (step S320). This message includes IP_{vGW1}, IP_{SGW1}, IP_{DeNB2}, LL-IP_{vAPP1}, IP_{vAPP1}, and IP_{vGW2}.

Subsequently, the DeNB 1 transmits the PBU message to the vGW 1 (step S322). This message includes IP_{vGW1}, IP_{DeNB1}, IP_{SGW1}, IP_{DeNB2}, LL-IP_{vAPP1}, IP_{vAPP1}, and IP_{vGW2}.

Subsequently, as illustrated in FIG. 27, the vGW 1 transmits a proxy binding acknowledge (PBA) message to the DeNB 1 (step S324). This message may include IP_{vGW2} which is the IP address of the vGW 2 which is the final destination and IP_{vAPP1} which is the IP address of the vAPP 1. Subsequently, the vGW 1 and the DeNB 1 execute a tunnel establishment procedure (step S326). Then, the vGW 1 updates the routing table related to IP_{vAPP1} (step S328). Specifically, the vGW 1 associates a transfer destination of the IP address of the vAPP 1 with the tunnel established in the foregoing tunnel establishment procedure.

Subsequently, the DeNB 1 transmits the PBA message to the S-GW 1 (step S330). Subsequently, the DeNB 1 and the S-GW 1 execute the tunnel establishment procedure (step S332). Then, the DeNB 1 updates the routing table related to IP_{vAPP1} (step S334). Specifically, the DeNB 1 associates the transfer destination of the IP address of the vAPP 1 with a tunnel established in the foregoing tunnel establishment procedure.

Subsequently, the S-GW 1 transmits the PBA message to the DeNB 2 (step S336). Subsequently, the S-GW 1 and the DeNB 2 execute the tunnel establishment procedure (step S338). Then, the S-GW 1 updates the routing table related to IP_{vAPP1} (step S340). Specifically, the S-GW 1 associates the transfer destination of the IP address of the vAPP 1 with the tunnel established in the foregoing tunnel establishment procedure.

Subsequently, the DeNB 2 transmits the PBA message to the vGW 2 (step S342). Subsequently, the DeNB 2 and the vGW 2 execute the tunnel establishment procedure (step S344). Then, the DeNB 2 updates the routing table related to IP_{vAPP1} (step S346). Specifically, the DeNB 2 associates the transfer destination of the IP address of the vAPP 1 with the tunnel established in the foregoing tunnel establishment procedure. In addition, the vGW 2 updates the routing table related to IP_{vAPP1} (step S348). Specifically, the vGW 2 associates the transfer destination of the IP address of the vAPP 1 with the tunnel established in the foregoing tunnel establishment procedure.

Then, the vGW 2 transmits a new VNF notification acknowledge message to the VNF RL MNGR 2 (step S350).

Note that the example in which the tunnel establishment procedure is executed in each entity after the transmission of the PBA message has been described above. However, the tunnel establishment procedure may be executed before the transmission when it is determined that the PBA is transmitted.

### <3.4. Modification examples>

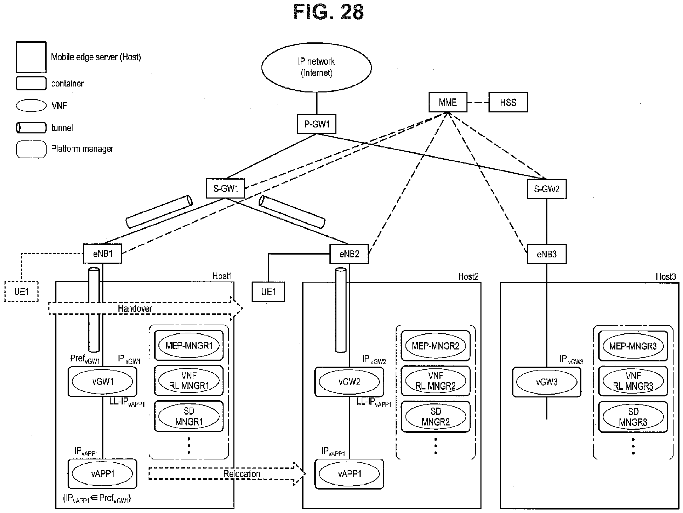

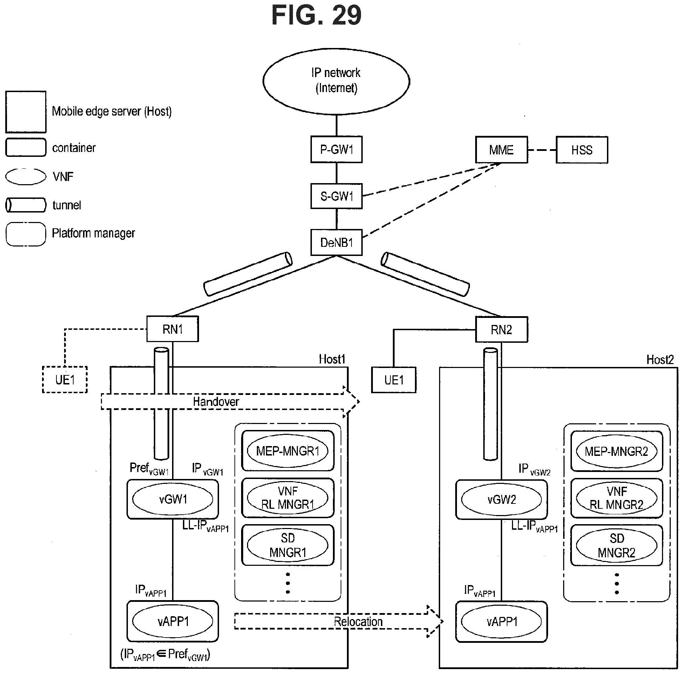

The example in which the VNF is moved in association with the handover of the UE or the RN forming the moving cell has been described above, but the present technology is not limited to the foregoing example. Another example will be described with reference to FIGS. 28 and 29.

FIGS. 28 and 29 are explanatory views for describing an example of movement of the VNF according to the embodiment. As illustrated in FIG. 28, the VNF used by the UE may be moved in association with handover to another eNB by the UE connected to the eNB. In this case, the eNB connected to the host has the above-described technical features of the DeNB. In addition, as illustrated in FIG. 29, the RN may be connected to the host and the VNF used by the UE may move in association with handover to another RN by the UE connected to the RN. In this case, the RN connected to the host has the above-described technical features of the DeNB. Of course, the host may be connected to the RN and the VNF used by a moving cell with a nested structure may be moved in association with handover to another RN or DeNB by the moving cell with the nested structure connected to the RN.

### <<4. Application examples>>

The technology of the present disclosure can be applied to various products. For example, the host may be realized as a server of any type such as a tower server, a rack server, a blade server, or the like. In addition, at least a part of constituent elements of the host may be realized in a module mounted in a server (e.g., an integrated circuit module configured in one die or a card or a blade inserted into a slot of a blade server).

Further, the eNB may be realized as any type of evolved node B (eNB), for example, a macro eNB, a small eNB, or the like. A small eNB may be an eNB that covers a smaller cell than a macro cell, such as a pico eNB, a micro eNB, or a home (femto) eNB. Alternatively, the eNB may be realized as another type of base station such as a node B or a base transceiver station (BTS). The eNB may include a main body that controls wireless communication (also referred to as a base station device) and one or more remote radio heads (RRHs) disposed in a different place from the main body. In addition, various types of terminals to be described below may operate as the eNB by temporarily or semi-permanently executing the base station function. Further, at least a part of constituent elements of the eNB may be realized in the base station device or a module for the base station device.

In addition, the UE and the RN may be realized as, for example, a mobile terminal such as a smartphone, a tablet personal computer (PC), a notebook PC, a portable game terminal, a portable/dongle type mobile router, or a digital camera, or an in-vehicle terminal such as a car navigation device. In addition, the UE and the RN may be realized as a terminal that performs machine-to-machine (M2M) communication (also referred to as a machine type communication (MTC) terminal). Furthermore, at least a part of the constituent elements of the UE and the RN may be realized in a module mounted in such a terminal (for example, an integrated circuit module configured in one die).

### <4.1. Application example with regard to host>

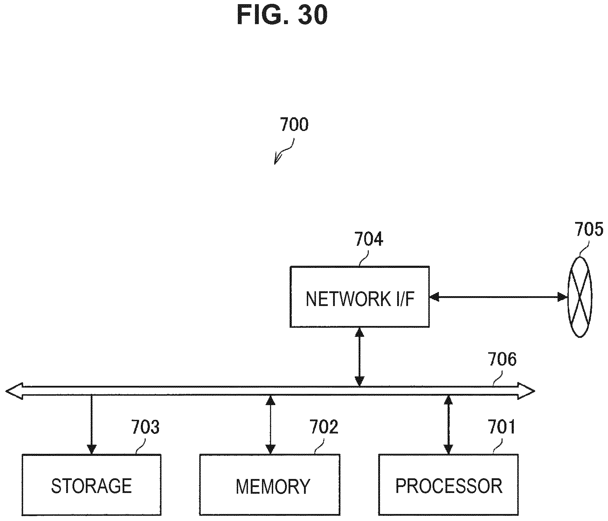

FIG. 30 is a block diagram illustrating an example of a schematic configuration of a server 700 to which the technology of the present disclosure may be applied. The server 700 includes a processor 701, a memory 702, a storage 703, a network interface 704, and a bus 706.

The processor 701 may be, for example, a central processing unit (CPU) or a digital signal processor (DSP) and controls various functions of the server 700. The memory 702 includes a random access memory (RAM) and a read only memory (ROM) and stores programs executed by the processor 701 and data. The storage 703 can include a storage medium such as a semiconductor memory or a hard disk.

The network interface 704 is a wired communication interface for connecting the server 700 to a wired communication network 705. The wired communication network 705 may be a core network such as an evolved packet core (EPC) or a packet data network (PDN) such as the Internet.

The bus 706 connects the processor 701, the memory 702, the storage 703, and the network interface 704 to each other. The bus 706 may include two or more buses that operate at different speeds (e.g., a high-speed bus and a low-speed bus).

In the server 700 illustrated in FIG. 30, one or more constituent elements included in the host described with reference to FIG. 19 (the control unit 430, for example) may be implemented by the processor 701. As an example, a program for causing a processor to function as the one or more constituent elements (i.e., a program for causing a processor to execute operations of the one or more constituent elements) may be installed in the server 700 and the processor 701 may execute the program. As another example, a module including the processor 701 and the memory 702 may be mounted in the server 700 and the one or more constituent elements may be implemented by the module. In this case, the module may store a program for causing a processor to function as the one or more constituent elements in the memory 702 and the program may be executed by the processor 701. The server 700 or the module may be provided as devices having the above-described one or more constituent elements as described above, or the program for causing a processor to function as the one or more constituent elements may be provided. In addition, a readable recording medium in which the program is recorded may be provided.

In addition, in the server 700 shown in FIG. 30, the network communication unit 410 described, for example, with reference to FIG. 19 may be implemented by the network interface 704. Moreover, the storage unit 420 may be implemented by the memory 702 and/or the storage 703. The server 700 illustrated in FIG. 30 may be realized on one or more types of hardware as a virtual server. In addition, the server 700 may also be realized as a virtual server on a cloud.

### <4.2. Application example with regard to base station>

### (First application example)

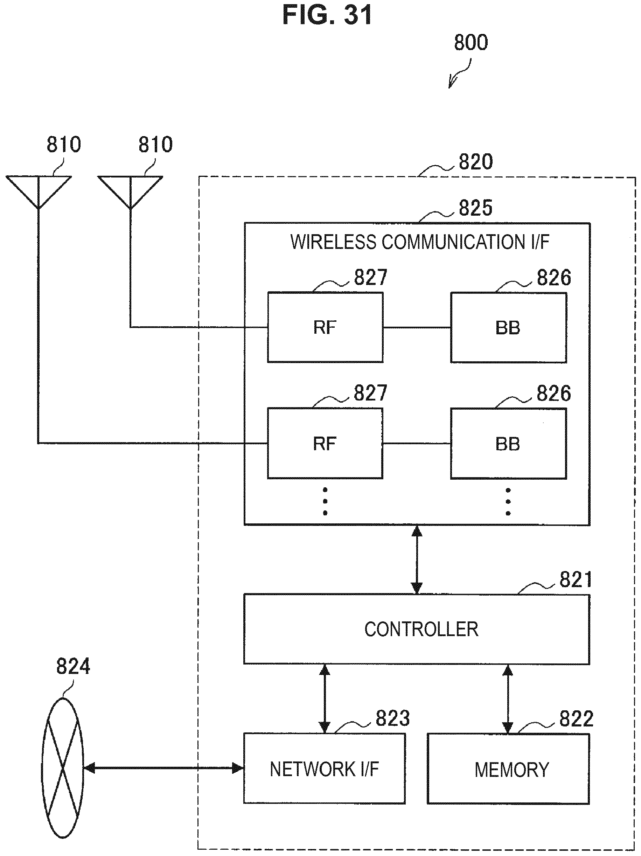

FIG. 31 is a block diagram illustrating a first example of a schematic configuration of an eNB to which the technology of the present disclosure may be applied. An eNB 800 includes one or more antennas 810 and a base station device 820. Each antenna 810 and the base station device 820 may be connected to each other via an RF cable.

Each of the antennas 810 includes a single or multiple antenna elements (such as multiple antenna elements included in an MIMO antenna), and is used for the base station device 820 to transmit and receive radio signals. The eNB 800 may include the multiple antennas 810, as illustrated in FIG. 31. For example, the multiple antennas 810 may be compatible with multiple frequency bands used by the eNB 800. Although FIG. 31 illustrates the example in which the eNB 800 includes the multiple antennas 810, the eNB 800 may also include a single antenna 810.

The base station device 820 includes a controller 821, a memory 822, a network interface 823, and a wireless communication interface 825.

The controller 821 may be, for example, a CPU or a DSP, and operates various functions of a higher layer of the base station device 820. For example, the controller 821 generates a data packet from data in signals processed by the wireless communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control, and scheduling. The control may be performed in corporation with an eNB or a core network node in the vicinity. The memory 822 includes RAM and ROM, and stores a program that is executed by the controller 821, and various types of control data (such as a terminal list, transmission power data, and scheduling data).

The network interface 823 is a communication interface for connecting the base station device 820 to a core network 824. The controller 821 may communicate with a core network node or another eNB via the network interface 823. In this case, the eNB 800 may be connected to a core network node or another eNB through a logical interface (e.g. S1 interface or X2 interface). The network interface 823 may also be a wired communication interface or a wireless communication interface for wireless backhaul. If the network interface 823 is a wireless communication interface, the network interface 823 may use a higher frequency band for wireless communication than a frequency band used by the wireless communication interface 825.

The wireless communication interface 825 supports any cellular communication scheme such as Long Term Evolution (LTE) and LTE-Advanced, and provides radio connection to a terminal positioned in a cell of the eNB 800 via the antenna 810. The wireless communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit configured to execute the program. Updating the program may allow the functions of the BB processor 826 to be changed. The module may be a card or a blade that is inserted into a slot of the base station device 820. Alternatively, the module may also be a chip that is mounted on the card or the blade. Meanwhile, the RF circuit 827 may include, for example, a mixer, a filter, and an amplifier, and transmits and receives radio signals via the antenna 810.

The wireless communication interface 825 may include the multiple BB processors 826, as illustrated in FIG. 31. For example, the multiple BB processors 826 may be compatible with multiple frequency bands used by the eNB 800. The wireless communication interface 825 may include the multiple RF circuits 827, as illustrated in FIG. 31. For example, the multiple RF circuits 827 may be compatible with multiple antenna elements. Although FIG. 31 illustrates the example in which the wireless communication interface 825 includes the multiple BB processors 826 and the multiple RF circuits 827, the wireless communication interface 825 may also include a single BB processor 826 or a single RF circuit 827.

In the eNB 800 shown in FIG. 31, one or more constituent elements included in the DeNB (the control unit 350, for example) described with reference to FIG. 18 may be implemented by the wireless communication interface 825. Alternatively, at least some of these constituent elements may be implemented by the controller 821. As an example, a module which includes a part (for example, the BB processor 826) or all of the wireless communication interface 825 and/or the controller 821 may be mounted in eNB 800, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the eNB 800, and the wireless communication interface 825 (for example, the BB processor 826) and/or the controller 821 may execute the program. As described above, the eNB 800, the base station device 820, or the module may be provided as a device which includes the one or more constituent elements, and the program for causing the processor to function as the one or more constituent elements may be provided. In addition, a readable recording medium in which the program is recorded may be provided.

In addition, in the eNB 800 shown in FIG. 31, the wireless communication unit 320 described with reference to FIG. 18 may be mounted on the wireless communication interface 825 (for example, the RF circuit 827). In addition, the antenna unit 310 may be mounted on the antenna 810. In addition, the network communication unit 330 may be mounted on the controller 821 and/or the network interface 823. In addition, the storage unit 340 may be mounted on the memory 822.

### (Second application example)

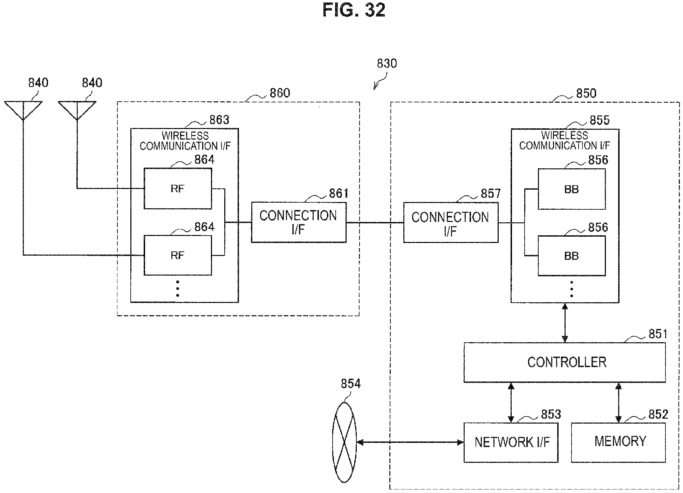

FIG. 32 is a block diagram illustrating a second example of a schematic configuration of an eNB to which the technology of the present disclosure may be applied. An eNB 830 includes one or more antennas 840, a base station device 850, and an RRH 860. Each antenna 840 and the RRH 860 may be connected to each other via an RF cable. The base station device 850 and the RRH 860 may be connected to each other via a high speed line such as an optical fiber cable.

Each of the antennas 840 includes a single or multiple antenna elements (such as multiple antenna elements included in an MIMO antenna), and is used for the RRH 860 to transmit and receive radio signals. The eNB 830 may include the multiple antennas 840, as illustrated in FIG. 32. For example, the multiple antennas 840 may be compatible with multiple frequency bands used by the eNB 830. Although FIG. 32 illustrates the example in which the eNB 830 includes the multiple antennas 840, the eNB 830 may also include a single antenna 840.

The base station device 850 includes a controller 851, a memory 852, a network interface 853, a wireless communication interface 855, and a connection interface 857. The controller 851, the memory 852, and the network interface 853 are the same as the controller 821, the memory 822, and the network interface 823 described with reference to FIG. 31.

The wireless communication interface 855 supports any cellular communication scheme such as LTE and LTE-Advanced, and provides wireless communication to a terminal positioned in a sector corresponding to the RRH 860 via the RRH 860 and the antenna 840. The wireless communication interface 855 may typically include, for example, a BB processor 856. The BB processor 856 is the same as the BB processor 826 described with reference to FIG. 31, except the BB processor 856 is connected to the RF circuit 864 of the RRH 860 via the connection interface 857. The wireless communication interface 855 may include the multiple BB processors 856, as illustrated in FIG. 32. For example, the multiple BB processors 856 may be compatible with multiple frequency bands used by the eNB 830. Although FIG. 32 illustrates the example in which the wireless communication interface 855 includes the multiple BB processors 856, the wireless communication interface 855 may also include a single BB processor 856.

The connection interface 857 is an interface for connecting the base station device 850 (wireless communication interface 855) to the RRH 860. The connection interface 857 may also be a communication module for communication in the above-described high speed line that connects the base station device 850 (wireless communication interface 855) to the RRH 860.

The RRH 860 includes a connection interface 861 and a wireless communication interface 863.

The connection interface 861 is an interface for connecting the RRH 860 (wireless communication interface 863) to the base station device 850. The connection interface 861 may also be a communication module for communication in the above-described high speed line.

The wireless communication interface 863 transmits and receives radio signals via the antenna 840. The wireless communication interface 863 may typically include, for example, the RF circuit 864. The RF circuit 864 may include, for example, a mixer, a filter, and an amplifier, and transmits and receives radio signals via the antenna 840. The wireless communication interface 863 may include multiple RF circuits 864, as illustrated in FIG. 32. For example, the multiple RF circuits 864 may support multiple antenna elements. Although FIG. 32 illustrates the example in which the wireless communication interface 863 includes the multiple RF circuits 864, the wireless communication interface 863 may also include a single RF circuit 864.

In the eNB 830 shown in FIG. 32, one or more constituent elements included in the DeNB (the control unit 350, for example) described with reference to FIG. 18 may be implemented by the wireless communication interface 855 and/or the wireless communication interface 863. Alternatively, at least some of these constituent elements may be implemented by the controller 851. As an example, a module which includes a part (for example, the BB processor 856) or all of the wireless communication interface 855 and/or the controller 851 may be mounted in eNB 830, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the eNB 830, and the wireless communication interface 855 (for example, the BB processor 856) and/or the controller 851 may execute the program. As described above, the eNB 830, the base station device 850, or the module may be provided as a device which includes the one or more constituent elements, and the program for causing the processor to function as the one or more constituent elements may be provided. In addition, a readable recording medium in which the program is recorded may be provided.

In addition, in the eNB 800 shown in FIG. 32, for example, the wireless communication unit 320 described with reference to FIG. 18 may be mounted on the wireless communication interface 863 (for example, the RF circuit 864). In addition, the antenna unit 310 may be mounted on the antenna 840. In addition, the network communication unit 330 may be mounted on the controller 851 and/or the network interface 853. In addition, the storage unit 340 may be mounted on the memory 852.

### <4.3. Application example with regard to terminal device>

### (First application example)

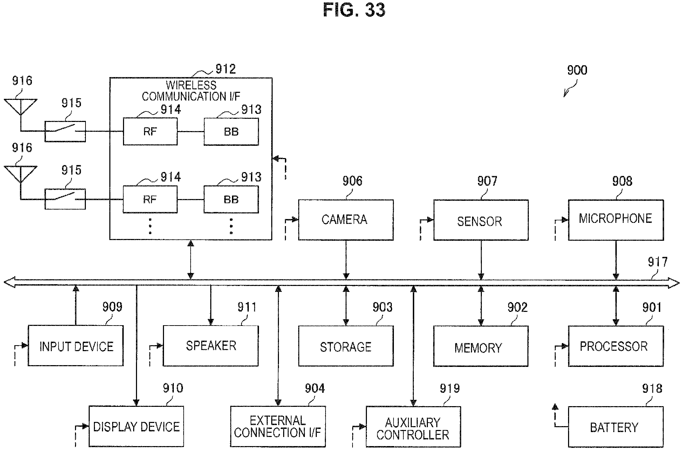

FIG. 33 is a block diagram illustrating an example of a schematic configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901, and data. The storage 903 may include a storage medium such as a semiconductor memory and a hard disk. The external connection interface 904 is an interface for connecting an external device such as a memory card and a universal serial bus (USB) device to the smartphone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input device 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The wireless communication interface 912 supports any cellular communication scheme such as LTE and LTE-Advanced, and performs wireless communication. The wireless communication interface 912 may typically include, for example, a BB processor 913 and an RF circuit 914. The BB processor 913 may perform, for example, encoding/decoding, modulating/demodulating, and multiplexing/demultiplexing, and performs various types of signal processing for wireless communication. Meanwhile, the RF circuit 914 may include, for example, a mixer, a filter, and an amplifier, and transmits and receives radio signals via the antenna 916. The wireless communication interface 912 may also be a one chip module that has the BB processor 913 and the RF circuit 914 integrated thereon. The wireless communication interface 912 may include the multiple BB processors 913 and the multiple RF circuits 914, as illustrated in FIG. 33. Although FIG. 33 illustrates the example in which the wireless communication interface 912 includes the multiple BB processors 913 and the multiple RF circuits 914, the wireless communication interface 912 may also include a single BB processor 913 or a single RF circuit 914.

Furthermore, in addition to a cellular communication scheme, the wireless communication interface 912 may support another type of wireless communication scheme such as a short-distance wireless communication scheme, a near field communication scheme, and a wireless local area network (LAN) scheme. In that case, the wireless communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the wireless communication interface 912.

Each of the antennas 916 includes a single or multiple antenna elements (such as multiple antenna elements included in an MIMO antenna), and is used for the wireless communication interface 912 to transmit and receive radio signals. The smartphone 900 may include the multiple antennas 916, as illustrated in FIG. 33. Although FIG. 33 illustrates the example in which the smartphone 900 includes the multiple antennas 916, the smartphone 900 may also include a single antenna 916.

Furthermore, the smartphone 900 may include the antenna 916 for each wireless communication scheme. In that case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to blocks of the smartphone 900 illustrated in FIG. 33 via feeder lines, which are partially shown as dashed lines in the figure. The auxiliary controller 919 operates a minimum necessary function of the smartphone 900, for example, in a sleep mode.

In the smartphone 900 shown in FIG. 33, one or more constituent elements included in the UE described with reference to FIG. 16 or the RN described with reference to FIG. 16 (the control unit 140 or the control unit 240) may be implemented by the wireless communication interface 912. Alternatively, at least some of these constituent elements may be implemented by the processor 901 or the auxiliary controller 919. As an example, a module which includes a part (for example, the BB processor 913) or all of the wireless communication interface 912, the processor 901 and/or the auxiliary controller 919 may be mounted in the smartphone 900, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the smartphone 900, and the wireless communication interface 912 (for example, the BB processor 913), the processor 901 and/or the auxiliary controller 919 may execute the program. As described above, the smartphone 900 or the module may be provided as a device which includes the one or more constituent elements, and the program for causing the processor to function as the one or more constituent elements may be provided. In addition, a readable recording medium in which the program is recorded may be provided.

In addition, in the smartphone 900 shown in FIG. 33, the wireless communication unit 120 or the wireless communication unit 220 described with reference to FIGS. 16 or 17, for example, may be implemented by the wireless communication interface 912 (for example, the RF circuit 914). Moreover, the antenna unit 110 or the antenna unit 210 may be implemented by the antenna 916. Moreover, the storage unit 130 or the storage unit 230 may be implemented by the memory 902.

### (Second application example)

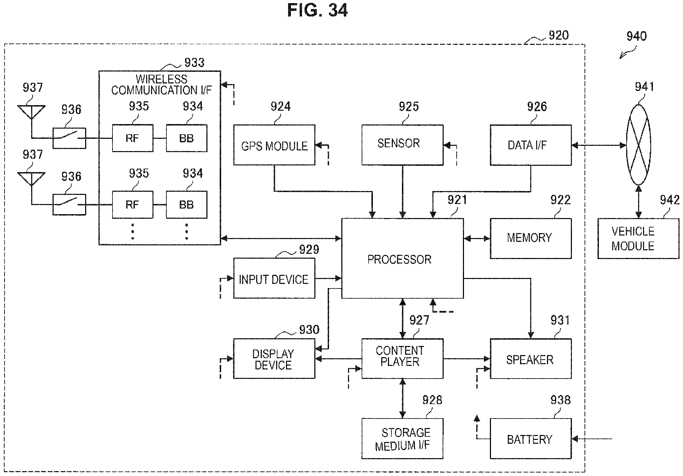

FIG. 34 is a block diagram illustrating an example of a schematic configuration of a car navigation device 920 to which the technology of the present disclosure may be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or a SoC, and controls a navigation function and another function of the car navigation device 920. The memory 922 includes RAM and ROM, and stores a program that is executed by the processor 921, and data.

The GPS module 924 uses GPS signals received from a GPS satellite to measure a position (such as latitude, longitude, and altitude) of the car navigation device 920. The sensor 925 may include a group of sensors such as a gyro sensor, a geomagnetic sensor, and a barometric sensor. The data interface 926 is connected to, for example, an in-vehicle network 941 via a terminal that is not shown, and acquires data generated by the vehicle, such as vehicle speed data.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or an information input from a user. The display device 930 includes a screen such as an LCD or an OLED display, and displays an image of the navigation function or content that is reproduced. The speaker 931 outputs sounds of the navigation function or the content that is reproduced.

The wireless communication interface 933 supports any cellular communication scheme such as LET and LTE-Advanced, and performs wireless communication. The wireless communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. Meanwhile, the RF circuit 935 may include, for example, a mixer, a filter, and an amplifier, and transmits and receives radio signals via the antenna 937. The wireless communication interface 933 may be a one chip module having the BB processor 934 and the RF circuit 935 integrated thereon. The wireless communication interface 933 may include the multiple BB processors 934 and the multiple RF circuits 935, as illustrated in FIG. 34. Although FIG. 34 illustrates the example in which the wireless communication interface 933 includes the multiple BB processors 934 and the multiple RF circuits 935, the wireless communication interface 933 may also include a single BB processor 934 or a single RF circuit 935.

Furthermore, in addition to a cellular communication scheme, the wireless communication interface 933 may support another type of wireless communication scheme such as a short-distance wireless communication scheme, a near field communication scheme, and a wireless LAN scheme. In that case, the wireless communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the wireless communication interface 933.

Each of the antennas 937 includes a single or multiple antenna elements (such as multiple antenna elements included in an MIMO antenna), and is used for the wireless communication interface 933 to transmit and receive radio signals. The car navigation device 920 may include the multiple antennas 937, as illustrated in FIG. 34. Although FIG. 34 illustrates the example in which the car navigation device 920 includes the multiple antennas 937, the car navigation device 920 may also include a single antenna 937.

Furthermore, the car navigation device 920 may include the antenna 937 for each wireless communication scheme. In that case, the antenna switches 936 may be omitted from the configuration of the car navigation device 920.

The battery 938 supplies power to blocks of the car navigation device 920 illustrated in FIG. 34 via feeder lines that are partially shown as dashed lines in the figure. The battery 938 accumulates power supplied from the vehicle.

In the car navigation device 920 shown in FIG. 34, one or more constituent elements included in the UE described with reference to FIG. 16 or the RN described with reference to FIG. 17 (the control unit 140 or the control unit 240) may be implemented by the wireless communication interface 933. Alternatively, at least some of these constituent elements may be implemented by the processor 921. As an example, a module which includes a part (for example, the BB processor 934) or all of the wireless communication interface 933 and/or the processor 921 may be mounted in the car navigation device 920, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the car navigation device 920, and the wireless communication interface 933 (for example, the BB processor 934) and/or the processor 921 may execute the program. As described above, the car navigation device 920 or the module may be provided as a device which includes the one or more constituent elements, and the program for causing the processor to function as the one or more constituent elements may be provided. In addition, a readable recording medium in which the program is recorded may be provided.

In addition, in the car navigation device 920 shown in FIG. 34, the wireless communication unit 120 or the wireless communication unit 220 described with reference to FIGS. 16 or 17, for example, may be implemented by the wireless communication interface 933 (for example, the RF circuit 935). Moreover, the antenna unit 110 or the antenna unit 210 may be implemented by the antenna 937. Moreover, the storage unit 130 or the storage unit 230 may be implemented by the memory 922.

The technology of the present disclosure may also be realized as an in-vehicle system (or a vehicle) 940 including one or more blocks of the car navigation device 920, the in-vehicle network 941, and a vehicle module 942. In other words, the in-vehicle system (or a vehicle) 940 may be provided as a device which includes the control unit 140 or the control unit 240. The vehicle module 942 generates vehicle data such as vehicle speed, engine speed, and trouble information, and outputs the generated data to the in-vehicle network 941.

### <<5. Conclusion>>

The embodiment of the present disclosure has been described above in details with reference to FIGS. 1 to 34. As described above, the wireless communication device (the DeNB, the eNB, or the RN) according to the embodiment transmits a message causing a movement target VNF operating on a corresponding host inside an EPS to move to another host corresponding to another wireless communication device to the other wireless communication device. Thus, information regarding the movement of an application can be shared between a movement source and a movement destination. Then, the movement of the VNF is negotiated between virtual gateways operating on hosts of the movement destination and the movement source so that movement or non-movement, selection of an appropriate movement destination, or the like can be performed.

In addition, the host of the movement destination allocates the same prefix as the IP address allocated before the movement to the VNF moved from the host of the movement source. Since an interface ID is not changed, the VNF can continuously use the same IP address as the IP address used before the movement, and thus movement transmittivity is realized. Thus, a user (for example, the UE or the RN) of the VNF can continuously use a service without being conscious of the movement of the VNF.

In addition, the prefix of which at least a part is common to the prefix of the vGW can be allocated to the VNFs operating on the host by the prefix delegation. Therefore, even in a case where the number of VNFs increases, high-order entities (for example, the eNB, the S-GW, and the like of a connection destination of the host) of the vGW may be routed to the vGW on the basis of the common part of the prefix. Accordingly, it is possible to suppress a signaling amount for updating a routing table.

In addition, the VNF can be performed using handover as a trigger. Thus, the VNF can be moved to a close host by a handover destination eNB, and thus it is possible to physically shorten a delay time.

In addition, a communicate route between hosts is established by a tunnel (for example, a bearer) of the 3GPP E-UTRAN. Since the existing 3GPP structure is used, it is possible to suppress a change from an existing protocol or a change to an existing network entity in the proposed protocol.

In addition, the proposed protocol enables the SDN/NFV technology which is currently formulated to be used and new expansion is also expected.

In addition, an application to the proposed protocol is not limited to a network in which a host is connected to an eNB. For example, the proposed protocol can also be applied to a network in which a host is connected to an RN.

In addition, even in a case where a movement target application or service is mounted on a VM or a case where the movement target application or service is mounted on a container, the proposed protocol can be applied as long as an IP address is assigned and used.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Note that it is not necessary for the processes described in this specification with reference to the flowchart and the sequence diagram to be executed in the order shown in the flowchart. Some processing steps may be performed in parallel. Further, some of additional steps can be adopted, or some processing steps can be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A wireless communication device including:
   a control unit configured to transmit a message to another wireless communication device, the message causing a movement target virtual network function (VNF) operating on a corresponding server inside an evolved packet system (EPS) to move to another server corresponding to the other wireless communication device.
(2) The wireless communication device according to (1), in which the message includes connection information of a virtual gateway operating on the server.
(3) The wireless communication device according to (2), in which the connection information is transmitted to the other server by the other wireless communication device.
(4) The wireless communication device according to (2) or (3), in which the connection information includes an IP address of the gateway.
(5) The wireless communication device according to any one of (2) to (4), in which the connection information includes an access point name (APN) of the gateway.
(6) The wireless communication device according to any one of (1) to (5), in which the message is transmitted using, as a trigger, handover from a subordinate cell of the wireless communication device to a subordinate cell of the other wireless communication device by a terminal device connected to the VNF.
(7) The wireless communication device according to (6), in which the control unit recognizes the handover on a basis of an IP address of the terminal device.
(8) The wireless communication device according to any one of (1) to (5), in which the message is transmitted using a fact that a communication situation related to the VNF satisfies a predetermined condition, as a trigger.
(9) The wireless communication device according to any one of (1) to (8), in which the control unit establishes a bearer for communication between the server and the other server with the other wireless communication device.
(10) A server that is provided inside an EPS and causes a VNF to operate, the server including:
   a control unit configured to cause a movement target VNF to move to the server on a basis of a message received by a corresponding wireless communication device from another wireless communication device corresponding to another server, the message causing the movement target VNF operating on the other server to move to the server.
(11) The server according to (10), in which the control unit acquires an IP address of the movement target VNF from the other server.
(12) The server according to (11), in which the control unit allocates, to the VNF moving from the other server, a same prefix as an IP address allocated before the movement.
(13) The server according to (12), in which the control unit notifies the VNF moving from the other server of a message including the prefix.
(14) The server according to any one of (10) to (13), in which the control unit establishes a bearer with the other server.
(15) The server according to (14), in which the control unit establishes the bearer by transmitting a proxy biding update (PBU).
(16) The server according to any one of (10) to (15), in which the control unit moves the movement target VNF to the server by newly activating a VNF using information regarding a movement target VNF operating on the other server, as an input.
(17) The server according to (16), in which the control unit acquires static information and dynamic information regarding the movement target VNF step by step.
(18) A method including:
   transmitting a message to another wireless communication device by a processor, the message causing a movement target VNF operating on a corresponding server inside an EPS to move to another server corresponding to the other wireless communication device.
(19) A method including:
   causing a movement target VNF to move to a server by the server that is provided inside an EPS and causes a VNF to operate, on a basis of a message received by a corresponding wireless communication device from another wireless communication device corresponding to another server, the message causing the movement target VNF operating on the other server to move to the server.

### Reference Signs List

- UE: terminal device
- RN: relay device, terminal device
- DeNB, eNB: base station
- Host: ME server
- 110: antenna unit
- 120: wireless communication unit
- 130: storage unit
- 140: control unit
- 210: antenna unit
- 220: wireless communication unit
- 230: storage unit
- 240: control unit
- 310: antenna unit
- 320: wireless communication unit
- 330: network communication unit
- 340: storage unit
- 350: control unit
- 410: network communication unit
- 420: storage unit
- 430: control unit

## Claims

1. A wireless communication device comprising:
a control unit configured to transmit a message to another wireless communication device, the message causing a movement target virtual network function (VNF) operating on a corresponding server inside an evolved packet system (EPS) to move to another server corresponding to the other wireless communication device.

2. The wireless communication device according to claim 1, wherein the message includes connection information of a virtual gateway operating on the server.

3. The wireless communication device according to claim 2, wherein the connection information is transmitted to the other server by the other wireless communication device.

4. The wireless communication device according to claim 2, wherein the connection information includes an IP address of the gateway.

5. The wireless communication device according to claim 2, wherein the connection information includes an access point name (APN) of the gateway.

6. The wireless communication device according to claim 1, wherein the message is transmitted using, as a trigger, handover from a subordinate cell of the wireless communication device to a subordinate cell of the other wireless communication device by a terminal device connected to the VNF.

7. The wireless communication device according to claim 6, wherein the control unit recognizes the handover on a basis of an IP address of the terminal device.

8. The wireless communication device according to claim 1, wherein the message is transmitted using a fact that a communication situation related to the VNF satisfies a predetermined condition, as a trigger.

9. The wireless communication device according to claim 1, wherein the control unit establishes a bearer for communication between the server and the other server with the other wireless communication device.

10. A server that is provided inside an EPS and causes a VNF to operate, the server comprising:
a control unit configured to cause a movement target VNF to move to the server on a basis of a message received by a corresponding wireless communication device from another wireless communication device corresponding to another server, the message causing the movement target VNF operating on the other server to move to the server.

11. The server according to claim 10, wherein the control unit acquires an IP address of the movement target VNF from the other server.

12. The server according to claim 11, wherein the control unit allocates, to the VNF moving from the other server, a same prefix as an IP address allocated before the movement.

13. The server according to claim 12, wherein the control unit notifies the VNF moving from the other server of a message including the prefix.

14. The server according to claim 10, wherein the control unit establishes a bearer with the other server.

15. The server according to claim 14, wherein the control unit establishes the bearer by transmitting a proxy biding update (PBU).

16. The server according to claim 10, wherein the control unit moves the movement target VNF to the server by newly activating a VNF using information regarding a movement target VNF operating on the other server, as an input.

17. The server according to claim 16, wherein the control unit acquires static information and dynamic information regarding the movement target VNF step by step.

18. A method comprising:
transmitting a message to another wireless communication device by a processor, the message causing a movement target VNF operating on a corresponding server inside an EPS to move to another server corresponding to the other wireless communication device.

19. A method comprising:
causing a movement target VNF to move to a server by the server that is provided inside an EPS and causes a VNF to operate, on a basis of a message received by a corresponding wireless communication device from another wireless communication device corresponding to another server, the message causing the movement target VNF operating on the other server to move to the server.
